# EUROPEAN PATENT APPLICATION

(11) **EP 4 852 385 A1**
(43) Date of publication of application: **09.12.2026**
(21) Application number: 24925524.1
(22) Date of filing: 11.10.2024
(51) Int. Cl.: H04L 41/0631

(54) **NETWORK OPERATION AND MAINTENANCE SYSTEM AND METHOD**

(30) Priority: 19.02.2024 CN 202410185730; 28.03.2024 CN 202410372568
(71) Applicant: HUAWEI TECHNOLOGIES CO., LTD., Shenzhen, Guangdong 518129 (CN)
(72) Inventor: ZHAO, Pinhang, Shenzhen, Guangdong 518129 (CN); WANG, Yuchen, Shenzhen, Guangdong 518129 (CN); GENG, Yue, Shenzhen, Guangdong 518129 (CN); WANG, Jiapeng, Shenzhen, Guangdong 518129 (CN)
(74) Representative: Huawei European IPR
(86) International application number: PCT/CN2024/124078
(87) International publication number: WO 2025/175786

(57) **Abstract**

This application provides a network operation and maintenance system including a plurality of intelligent agents and a network operation and maintenance method. Different intelligent agents are configured to complete work that is not completely the same. For example, a first intelligent agent actively releases a network operation and maintenance task by using obtained first operation and maintenance information, and a second intelligent agent determines, based on the network operation and maintenance task, a first solution used to complete the network operation and maintenance task. The first intelligent agent may independently release a network operation and maintenance task based on obtained operation and maintenance information such as network data, without relying on operation and maintenance personnel to indicate network operation and maintenance work. In addition, the second intelligent agent is driven by a language model, and the second intelligent agent can provide the appropriate and accurate first solution to complete the network operation and maintenance task, without relying on a network operation and maintenance suggestion provided by operation and maintenance personnel. In conclusion, the plurality of intelligent agents in the network operation and maintenance system can well complete the network operation and maintenance task through autonomous collaboration, without relying on participation of the operation and maintenance personnel, offering good application value in a network operation and maintenance scenario.

## Description

This application claims priorities to Chinese Patent Application No. 202410185730.7, filed with the China National Intellectual Property Administration on February 19, 2024 and entitled "NETWORK FAULT REPAIRING METHOD AND RELATED SYSTEM", and to Chinese Patent Application No. 202410372568.X, filed with the China National Intellectual Property Administration on March 28, 2024 and entitled "NETWORK OPERATION AND MAINTENANCE SYSTEM AND METHOD", both of which are incorporated herein by reference in their entireties.

### TECHNICAL FIELD

This application relates to a network operation and maintenance scenario, and in particular, to a network operation and maintenance system and method.

### BACKGROUND

In recent years, the rapid development of a large language model (Large Language Model, LLM) promotes the application of artificial intelligence (Artificial Intelligence, AI) in various industries and specialized systems. In a network fault operation and maintenance scenario, when a network fault occurs, a human expert learns of the fault from a notification of a network operation management system or in another manner, and actively interacts, by using a text, with an operation and maintenance assistant that is based on the network operation management system, so that the operation and maintenance assistant assists the human expert in analyzing the fault. The operation and maintenance assistant is an artificial intelligence assistant that can operate one or more network operation management systems and complete, to some extent, work of receiving instructions by communicating with humans in text.

An operation and maintenance assistance capability of the operation and maintenance assistant is limited to providing fault repairing suggestions within a preset scope. The human expert still needs to confirm whether the operation and maintenance assistant successfully diagnoses the fault, whether a fault analysis conclusion is correct, and whether a fault repairing method is effective, and the human expert still needs to perform all fault repairing operations to check whether the fault is successfully repaired. When a fault caused by unknown situations occurs, the operation and maintenance assistant does not have an active reasoning capability for rectifying the fault. Fault scenario generalization is not good. When the analysis conclusion of the operation and maintenance assistant is incorrect or the repairing solution is ineffective, the human expert needs to manually analyze the fault again and provide a repairing solution. Therefore, an autonomous fault management capability is not strong. The operation and maintenance assistant has limited knowledge and skills in network operation and maintenance and fault repairing, and cannot be familiar with or master all network scenarios and fault events.

### SUMMARY

Embodiments of this application provide a network operation and maintenance system and method. A plurality of intelligent agents in the network operation and maintenance system can well complete a network operation and maintenance task through autonomous collaboration, without relying on participation of operation and maintenance personnel or technical personnel. Therefore, the system has a high degree of automation and intelligence, offering good application value in a network operation and maintenance scenario.

According to a first aspect, an embodiment of this application provides a network operation and maintenance system. The network operation and maintenance system includes a first intelligent agent and a second intelligent agent. The first intelligent agent is configured to obtain first operation and maintenance information. For example, the first intelligent agent obtains the first operation and maintenance information from a network operation management system. Operation and maintenance information includes but is not limited to fault information of a device, a connection topology between devices, information in a device manual, experience summarized by operation and maintenance personnel, and the like. Then, the first intelligent agent is configured to release a network operation and maintenance task based on the first operation and maintenance information. The network operation and maintenance task includes but is not limited to a network fault repairing task, a network line provisioning task, and the like. After reading the network operation and maintenance task, the second intelligent agent determines, based on the network operation and maintenance task, a first solution used to complete the network operation and maintenance task, and releases the first solution. The first solution includes an implementation of completing the network operation and maintenance task, and may further include an analysis step for determining the first solution and causality between steps for determining the first solution, and the like. The second intelligent agent is driven by a language model, so that the second intelligent agent has a strong learning and thinking capability, and can independently provide the appropriate and accurate first solution.

In this implementation, the network operation and maintenance system including a plurality of intelligent agents is provided. Different intelligent agents are configured to complete work that is not completely the same. For example, the first intelligent agent actively releases the network operation and maintenance task by using the obtained first operation and maintenance information, and the second intelligent agent determines, based on the network operation and maintenance task, the first solution used to complete the network operation and maintenance task. In this embodiment of this application, the first intelligent agent may independently release a network operation and maintenance task based on obtained operation and maintenance information such as network data, without relying on operation and maintenance personnel or technical personnel to indicate network operation and maintenance work. In addition, the second intelligent agent is driven by the language model, and the language model is a deep neural network trained based on knowledge and experience of telecommunications and various network fields. Therefore, the second intelligent agent can provide the appropriate and accurate first solution to complete the network operation and maintenance task, without relying on a network operation and maintenance suggestion provided by the operation and maintenance personnel or the technical personnel. In conclusion, the plurality of intelligent agents in the network operation and maintenance system provided in this embodiment of this application can well complete the network operation and maintenance task through autonomous collaboration, without relying on participation of the operation and maintenance personnel or the technical personnel. Therefore, the system has a high degree of automation and intelligence, offering good application value in a network operation and maintenance scenario.

In some possible implementations, the network operation and maintenance system further includes a third intelligent agent. The third intelligent agent is configured to: evaluate the first solution, and release an evaluation conclusion. The evaluation conclusion specifically includes a conclusion about whether the first solution is feasible. In addition, the evaluation conclusion may further include other information such as an evaluation idea and a reason for determining the evaluation conclusion. In this implementation, the first solution provided by the second intelligent agent may be evaluated by the third intelligent agent. This helps ensure feasibility, security, and the like of the solution.

In some possible implementations, the first solution includes an analysis step for determining the first solution. The third intelligent agent is specifically configured to evaluate the first solution based on the analysis step. To be specific, the third intelligent agent can perform logical reasoning based on the analysis step for determining the first solution by the second intelligent agent, to obtain the evaluation conclusion. The analysis step herein may be specifically a plurality of steps of thinking and logical analysis performed by the second intelligent agent in a process of determining the first solution, and there is causality between the steps. The third intelligent agent can effectively determine whether the first solution is appropriate by performing logical reasoning based on the analysis step provided by the second intelligent agent.

In some possible implementations, the third intelligent agent is further configured to release a first request message based on the first solution. The second intelligent agent is further configured to release, based on the first request message, an analysis step for determining the first solution. The third intelligent agent is specifically configured to evaluate the first solution based on the analysis step. To be specific, if the second intelligent agent releases only the first solution but does not release the analysis step for determining the first solution, the third intelligent agent may further request the second intelligent agent to release the analysis step for determining the first solution, so that the third intelligent agent can effectively determine whether the first solution is appropriate by performing logical reasoning based on the analysis step provided by the second intelligent agent.

In some possible implementations, the third intelligent agent is further configured to release a second request message based on the first solution. The first intelligent agent is further configured to: obtain second operation and maintenance information based on the second request message, and release the second operation and maintenance information. The third intelligent agent is specifically configured to evaluate the first solution based on the second operation and maintenance information. To be specific, more information is needed for the third intelligent agent to evaluate the first solution, and the third intelligent agent may request the first intelligent agent to provide the second operation and maintenance information, to help improve evaluation accuracy.

In some possible implementations, if the evaluation conclusion indicates that the first solution is infeasible, the second intelligent agent is further configured to: determine, based on the network operation and maintenance task, a second solution used to complete the network operation and maintenance task, and release the second solution. To be specific, after reading the evaluation conclusion that indicates that the first solution is infeasible and that is released by the third intelligent agent, the second intelligent agent negates an analysis idea of previously determining the first solution, and may further determine the second solution with reference to evaluation logic and a suggestion of the third intelligent agent and based on a new idea, to implement solution optimization.

In some possible implementations, if the evaluation conclusion indicates that the first solution is infeasible, the first intelligent agent is further configured to: obtain third operation and maintenance information, and release the third operation and maintenance information. The second intelligent agent is specifically configured to determine the second solution based on the third operation and maintenance information and the network operation and maintenance task. To be specific, to facilitate determining the new second solution by the second intelligent agent, the first intelligent agent may obtain the third operation and maintenance information from the network operation management system, and provide the third operation and maintenance information for the second intelligent agent, so that the second intelligent agent determines the more secure and effective second solution jointly based on the third operation and maintenance information and the network operation and maintenance task.

In some possible implementations, the second intelligent agent is further configured to release a third request message based on the network operation and maintenance task. The first intelligent agent is configured to obtain fourth operation and maintenance information based on the third request message. The second intelligent agent is specifically configured to determine the first solution based on the network operation and maintenance task and the fourth operation and maintenance information. To be specific, more information is needed for the second intelligent agent to perform analysis to determine the first solution, and the second intelligent agent may request the first intelligent agent to provide the fourth operation and maintenance information, so as to help the second intelligent agent analyze to obtain the more secure and effective first solution.

In some possible implementations, the second intelligent agent is specifically configured to invoke a network operation and maintenance tool based on the network operation and maintenance task, to determine the first solution. This enriches manners used by the second intelligent agent to determine the first solution. For example, the network operation and maintenance task is the network fault repairing task. The second intelligent agent sends an instruction to the network operation management system, to invoke a tool like a Ping instruction or fault knowledge search in the network operation management system, so as to help determine the first solution used to rectify a network fault.

In some possible implementations, the first intelligent agent and the second intelligent agent run in a first network operation management system, the first intelligent agent and the second intelligent agent run in a system independent of the first network operation management system, or the first intelligent agent and the second intelligent agent run in different network operation and maintenance management systems. A plurality of possible running environments of a plurality of intelligent agents are provided herein, and an application scenario of this solution is extended.

In some possible implementations, interaction between the first intelligent agent and the second intelligent agent is presented by using a dialog in a channel, so that the dialog between the intelligent agents is conveniently presented to the operation and maintenance personnel or the technical personnel. This design that makes a procedure of the network operation and maintenance task transparent and intervenable can help the operation and maintenance personnel or the technical personnel increase a degree of trust in a network operation and maintenance system having a plurality of intelligent agents. Dual assurance of the intelligent agent and the operation and maintenance personnel or the technical personnel can improve network operation and maintenance reliability. For example, information and dialog content exchanged between the intelligent agents are mainly a natural language text and an understandable structured expression (for example, a data table and a device configuration command line).

In some possible implementations, the language model is a large language model (large language model, LLM). Specifically, the large language model in this embodiment of this application is a deep neural network trained based on knowledge and experience in telecommunications and various network fields. For example, such knowledge includes IP network knowledge, optical network knowledge, mobile bearer network knowledge, wireless local area network knowledge, and virtual network knowledge. In this way, the large language model is used to drive an intelligent agent, so that a plurality of intelligent agents can collaborate to better complete a network operation and maintenance task.

In some possible implementations, the first intelligent agent and/or the second intelligent agent are/is configured to: evaluate the first solution, and release an evaluation conclusion. In other words, each intelligent agent may have a plurality of responsibilities and functions, and the intelligent agent needs to perform a corresponding operation based on a responsibility scope of the intelligent agent. If an intelligent agent has a plurality of responsibilities and functions, the intelligent agent may flexibly switch a role and perform different operations based on an actual scenario requirement. This increases a degree of intelligence of a single intelligent agent, and improves a capability of a plurality of intelligent agents to collaborate to complete a network operation and maintenance task.

According to a second aspect, an embodiment of this application provides a network operation and maintenance method. The network operation and maintenance method is applied to a network operation and maintenance system. The network operation and maintenance system includes a first intelligent agent and a second intelligent agent. The network operation and maintenance method includes the following steps: The first intelligent agent obtains first operation and maintenance information, and releases a network operation and maintenance task based on the first operation and maintenance information; and the second intelligent agent determines, based on the network operation and maintenance task, a first solution used to complete the network operation and maintenance task, and releases the first solution. The second intelligent agent is driven by a language model.

In some possible implementations, the network operation and maintenance system further includes a third intelligent agent. The method further includes: The third intelligent agent evaluates the first solution, and releases an evaluation conclusion.

In some possible implementations, the first solution includes an analysis step for determining the first solution. That the third intelligent agent evaluates the first solution includes: The third intelligent agent evaluates the first solution based on the analysis step.

In some possible implementations, the method further includes: The third intelligent agent releases a first request message based on the first solution; and the second intelligent agent releases, based on the first request message, an analysis step for determining the first solution. That the third intelligent agent evaluates the first solution includes: The third intelligent agent evaluates the first solution based on the analysis step.

In some possible implementations, the method further includes: The third intelligent agent releases a second request message based on the first solution; and the first intelligent agent obtains second operation and maintenance information based on the second request message, and releases the second operation and maintenance information. That the third intelligent agent evaluates the first solution includes: The third intelligent agent evaluates the first solution based on the second operation and maintenance information.

In some possible implementations, if the evaluation conclusion indicates that the first solution is infeasible, the method further includes: The second intelligent agent determines, based on the network operation and maintenance task, a second solution used to complete the network operation and maintenance task, and releases the second solution.

In some possible implementations, if the evaluation conclusion indicates that the first solution is infeasible, the method further includes: The first intelligent agent obtains third operation and maintenance information, and releases the third operation and maintenance information. That the second intelligent agent determines, based on the network operation and maintenance task, the second solution used to complete the network operation and maintenance task includes: The second intelligent agent determines the second solution based on the third operation and maintenance information and the network operation and maintenance task.

In some possible implementations, the method further includes: The second intelligent agent releases a third request message based on the network operation and maintenance task; and the first intelligent agent obtains fourth operation and maintenance information based on the third request message. That the second intelligent agent determines, based on the network operation and maintenance task, the first solution used to complete the network operation and maintenance task includes: The second intelligent agent determines the first solution based on the network operation and maintenance task and the fourth operation and maintenance information.

In some possible implementations, that the second intelligent agent determines, based on the network operation and maintenance task, the first solution used to complete the network operation and maintenance task includes: The second intelligent agent invokes a network operation and maintenance tool based on the network operation and maintenance task, to determine the first solution.

In some possible implementations, the first intelligent agent and the second intelligent agent run in a first network operation management system, the first intelligent agent and the second intelligent agent run in a system independent of the first network operation management system, or the first intelligent agent and the second intelligent agent run in different network operation and maintenance management systems.

In some possible implementations, interaction between the first intelligent agent and the second intelligent agent is presented by using a dialog in a channel.

In some possible implementations, the language model is a large language model.

In some possible implementations, the method further includes: The first intelligent agent evaluates the first solution, and releases an evaluation conclusion, and/or the second intelligent agent evaluates the first solution, and releases an evaluation conclusion.

An embodiment of this application provides a network operation and maintenance system including a plurality of intelligent agents. Different intelligent agents are configured to complete work that is not completely the same. For example, a first intelligent agent actively releases a network operation and maintenance task by using obtained first operation and maintenance information, and a second intelligent agent determines, based on the network operation and maintenance task, a first solution used to complete the network operation and maintenance task. In this embodiment of this application, the first intelligent agent may independently release a network operation and maintenance task based on obtained operation and maintenance information such as network data, without relying on operation and maintenance personnel or technical personnel to indicate network operation and maintenance work. In addition, the second intelligent agent is driven by a language model, and the language model is a deep neural network trained based on knowledge and experience of telecommunications and various network fields. Therefore, the second intelligent agent can provide the appropriate and accurate first solution to complete the network operation and maintenance task, without relying on a network operation and maintenance suggestion provided by the operation and maintenance personnel or the technical personnel. In conclusion, the plurality of intelligent agents in the network operation and maintenance system provided in this embodiment of this application can well complete the network operation and maintenance task through autonomous collaboration, without relying on participation of the operation and maintenance personnel or the technical personnel. Therefore, the system has a high degree of automation and intelligence, offering good application value in a network operation and maintenance scenario.

### BRIEF DESCRIPTION OF DRAWINGS

FIG. 1 is a diagram of a scenario in which a plurality of intelligent agents implement network operation and maintenance according to an embodiment of this application;
FIG. 2A and FIG. 2B are a diagram of an implementation in which a plurality of intelligent agents collaborate to complete a network operation and maintenance task according to an embodiment of this application;
FIG. 3 is a diagram of an implementation in which an intelligent agent operates a network operation management system according to an embodiment of this application;
FIG. 4 is a diagram of another implementation in which a plurality of intelligent agents collaborate to complete a network operation and maintenance task according to an embodiment of this application;
FIG. 5 is a diagram of a first running environment of a plurality of intelligent agents according to an embodiment of this application;
FIG. 6 is a diagram of a second running environment of a plurality of intelligent agents according to an embodiment of this application;
FIG. 7 is a diagram of a third running environment of a plurality of intelligent agents according to an embodiment of this application;
FIG. 8 is a diagram of a fourth running environment of a plurality of intelligent agents according to an embodiment of this application;
FIG. 9 is a diagram of an implementation in which a plurality of intelligent agents collaborate to rectify a network fault according to an embodiment of this application;
FIG. 10(a) is a diagram of a dialog channel in a process in which a plurality of intelligent agents collaborate to rectify a network fault according to an embodiment of this application;
FIG. 10(b) is a diagram of another dialog channel in a process in which a plurality of intelligent agents collaborate to rectify a network fault according to an embodiment of this application;
FIG. 10(c) is a diagram of another dialog channel in a process in which a plurality of intelligent agents collaborate to rectify a network fault according to an embodiment of this application; and
FIG. 11 is a diagram of another implementation in which a plurality of intelligent agents collaborate to rectify a network fault according to an embodiment of this application.

### DESCRIPTION OF EMBODIMENTS

Embodiments of this application provide a network operation and maintenance system and method. A plurality of intelligent agents in the network operation and maintenance system can well complete a network operation and maintenance task through autonomous collaboration, without relying on participation of operation and maintenance personnel or technical personnel. Therefore, the system has a high degree of automation and intelligence, offering good application value in a network operation and maintenance scenario.

In the specification, the claims, and the accompanying drawings of this application, the terms "first", "second", and the like are intended to distinguish between similar objects but do not necessarily indicate a specific order or sequence. It should be understood that the descriptions termed in such a manner are interchangeable in appropriate cases, so that embodiments can be implemented in another order than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Naming or numbering of steps in embodiments of this application does not mean that steps in a method procedure need to be performed based on a time/logical sequence indicated by the naming or numbering. An execution sequence of the steps in the procedure that have been named or numbered may be changed based on a technical objective to be implemented, provided that same or similar technical effects can be achieved. Unit division in embodiments of this application is logical division and may be other division in an actual implementation. For example, a plurality of units may be combined or integrated into another system, or some features may be ignored or not performed. In addition, the displayed or discussed mutual couplings or direct couplings or communication connections may be implemented through some interfaces. The indirect couplings or the communication connections between the units may be implemented in electronic or other similar forms. This is not limited in embodiments of this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

For ease of understanding, the following first describes some technical terms used in embodiments of this application.

### (1) Network operation management system

The network operation management system is computer software that provides functions related to network operation and maintenance, such as network management, device control, and operation and maintenance. The network operation management system is configured to manage and control a network device and a related facility, may collect network-related data, modify network device or network function configurations, and has a capability of diagnosing and repairing a network fault. There may be one or more network operation management systems in a network environment. Some intelligent agents in embodiments of this application may communicate with and operate each network operation management system via an instruction executor.

### (2) Large language model (large language model, LLM)

The large language model is a deep learning model trained by using a large amount of text data, and can generate a natural language text or understand a meaning of a language text. The large language model can process a plurality of natural language tasks, such as text classification, question answering, and dialogs, and is an important way to artificial intelligent. Specifically, the large language model in embodiments of this application is a deep neural network whose input and output are both natural language texts or structured expressions, that can simulate human understanding, thinking, behavior, and expression, and that is trained based on knowledge and experience in telecommunications and various network fields. For example, such knowledge includes IP network knowledge, optical network knowledge, mobile bearer network knowledge, wireless local area network knowledge, and virtual network knowledge.

### (3) Intelligent agent (Agent or AI Agent)

The intelligent agent is an intelligent entity that has a capability of simulating operation and maintenance personnel or technical personnel to complete a network operation and maintenance task. A plurality of intelligent agents can complete the network operation and maintenance task through interaction and collaboration. Some intelligent agents may use a network operation management system to sense and understand a network status, or invoke an application programming interface (Application Programming Interface, API) of the network operation management system to use an auxiliary tool to implement a fault repairing operation. In phases in which the intelligent agent processes and calculates related data, and thinks about and proposes a fault repairing method, the intelligent agent may send a process and a conclusion of self-thinking in a dialog channel, to present to another intelligent agent. In this way, the another intelligent agent can understand thinking logic of the intelligent agent, to keep the thinking process transparent to operation and maintenance personnel or technical personnel. The intelligent agent can learn new operation and maintenance knowledge based on a large language model on which the intelligent agent is based, and use the learned knowledge to reason and decompose a new or complex network operation and maintenance task that has not been encountered before. Intelligent agents may be classified into a plurality of types based on responsibilities. An intelligent agent of a specific type has stronger thinking and operation capabilities in a specific field and task corresponding to the intelligent agent, and can complete a task that cannot be completed by another intelligent agent.

### (4) Autoregressive large language model

The autoregressive large language model enables an intelligent agent to have a capability of thinking while using another tool to assist in thinking. A Toolformer technology, combined with the autoregressive large language model and an instruction executor, enables the intelligent agent to invoke an API of a related tool in a network operation management system by using output instructions in a thinking and output process, and run the related tool (for example, a scientific calculator and a Ping instruction), to ensure accuracy of a key output.

### (5) Non-autoregressive large language model

The non-autoregressive large language model has a strong context association capability, and may extend a capability of a specific intelligent agent in a specific task by combining feature representations and outputs of a downstream task model and a large language model. For example, an intelligent agent based on the large language model of this type can more accurately identify a supervision opinion by combining an emotion analysis task model, and determine whether a current step complies with the supervision opinion.

Embodiments of this application provide a network operation and maintenance system including a plurality of intelligent agents. The plurality of intelligent agents are configured to complete an operation and maintenance task based on network data. A responsibility of each intelligent agent includes but is not limited to obtaining network data, analyzing a network status, generating a fault repairing method, implementing an authorized and capable repairing operation, and checking a fault repairing status. A network operation and maintenance scenario of fault repairing is used as an example. When attempting to repair a network fault, the plurality of intelligent agents may determine, through division of labor and cooperation, whether a fault analysis conclusion is correct and whether a fault repairing method is effective and secure, and independently check whether the fault is repaired after performing an authorized and capable repairing operation. The plurality of intelligent agents can collaborate to resolve a problem that a single intelligent agent cannot resolve. For example, when the single intelligent agent repairs a network fault, there is subjectivity in a fault repairing solution of the single intelligent agent, to be specific, the fault repairing solution that the single intelligent agent independently perceives is incorrect, but the single intelligent agent cannot find an error in the solution due to the subjectivity. For another example, a specialized capability of the single intelligent agent is domain-biased, a degree of intelligence of the single intelligent agent is limited, and the single intelligent agent cannot resolve a problem exceeding a capability scope of the single intelligent agent. For still another example, the single intelligent agent can operate only a single network operation management system, and information about a plurality of network operation management systems is needed for diagnosing a specific network fault.

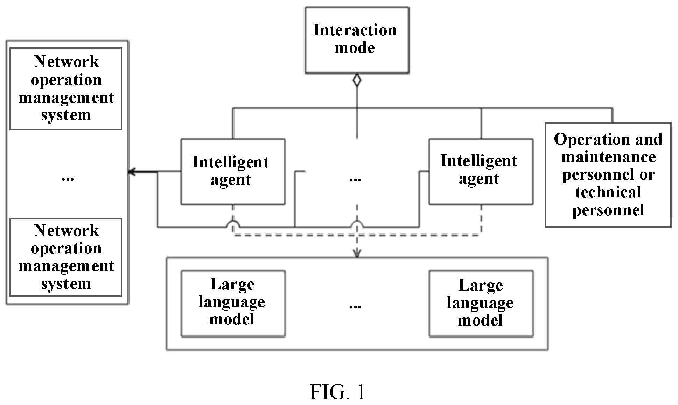

FIG. 1 is a diagram of a scenario in which a plurality of intelligent agents implement network operation and maintenance according to an embodiment of this application. As shown in FIG. 1, at least one of the plurality of intelligent agents can interact with a network operation management system, and the plurality of intelligent agents may collaborate to complete a network operation and maintenance task through interaction. Specifically, the plurality of intelligent agents implement communication, discussion, and interaction in a form of information transferring and dialogs, and complete the network operation and maintenance task, for example, repairing a network fault, through collaboration and relay without participation of operation and maintenance personnel or technical personnel. Information and dialog content are mainly a natural language text or an understandable structured expression (for example, a data table and a device configuration command line). During actual application, a quantity of intelligent agents may be flexibly adjusted based on an application scenario and a requirement. With more intelligent agents, an overall capability of an intelligent agent cluster can be enhanced; and with fewer intelligent agents, unnecessary computing overheads can be reduced.

An interaction mode between the plurality of intelligent agents may be implemented by using dialogs. For example, the plurality of intelligent agents interact with each other in a dialog channel, and the intelligent agents interact with each other by sending text or structured expression information in the dialog channel. For example, each intelligent agent may notify another intelligent agent of thinking and a fault analysis conclusion of the intelligent agent through the dialog channel. Each intelligent agent uses information in the dialog channel to complete a network operation and maintenance responsibility of the intelligent agent. For example, each intelligent agent can diagnose data provided by another intelligent agent and check a repairing solution provided by another intelligent agent. A speaking sequence of the intelligent agents is determined by the intelligent agents, and is not limited by a rule. For example, each intelligent agent may determine, based on information such as a text or an expression in the dialog channel, whether to perform the responsibility of the intelligent agent and respond to content in the dialog channel. Information sent by any intelligent agent may be replied to by one or more intelligent agents. In other words, the plurality of intelligent agents in the dialog channel interact with each other in a mode similar to "group chat". The dialog channel may also be referred to as a dialog window (chat window). All information such as a natural language text, a data symbol, and a visual image released by each intelligent agent may be presented in the dialog channel. The intelligent agents interact with each other a plurality of times until an agreement is reached, to complete the operation and maintenance task. When a deviation occurs or a repairing solution fails to be executed in a process in which the plurality of intelligent agents complete the operation and maintenance task, the plurality of intelligent agents interact with each other again until the operation and maintenance task is successfully completed. For a network operation and maintenance task that cannot be completed, for example, a device needs to be physically repaired, the plurality of intelligent agents present information such as the task, a process, and a conclusion to the operation and maintenance personnel or the technical personnel through the dialog channel, to quickly resolve a network operation and maintenance problem. The plurality of intelligent agents may reach an agreement according to a one-vote veto rule and promote the network operation and maintenance task. The plurality of intelligent agents spontaneously communicate and discuss with each other to handle disputes and gain mutual recognition from the plurality of intelligent agents. For example, the plurality of intelligent agents may perform cross-verification to ensure that each phase of a fault repairing procedure is correct, and avoid an insecure, unreliable, or ineffective fault repairing operation.

The dialog channel is used as a manner of information transferring between intelligent agents, and may also be supervised by the operation and maintenance personnel or the technical personnel. For example, in a network fault repairing scenario, operation and maintenance personnel or technical personnel with corresponding permission may suspend, terminate, or modify an ongoing fault analysis or repairing operation in any phase of a fault diagnosis or fault repairing procedure. In any phase, the operation and maintenance personnel or the technical personnel may also provide a processing suggestion or instruction for a current phase, for example, analyzing data, analyzing a fault, providing a repairing solution, confirming a repairing solution, or checking a repairing status. Operations or processing of the operation and maintenance personnel or the technical personnel is not a necessary step for the plurality of intelligent agents to repair a fault, but rather a mechanism to ensure that the plurality of intelligent agents complete the operation and maintenance task. This design that makes the fault repairing procedure transparent and intervenable can help the operation and maintenance personnel or the technical personnel increase a degree of trust in a network operation and maintenance system having a plurality of intelligent agents. Dual assurance of the intelligent agent and the operation and maintenance personnel or the technical personnel can improve network operation and maintenance reliability.

Some or all of the plurality of intelligent agents are driven by a language model, and the language model may be specifically a large language model shown in FIG. 1. An intelligent agent that is not driven by the language model may also participate in interaction between the plurality of intelligent agents. For example, such an intelligent agent may be driven by non-intelligent software or a non-intelligent tool. A quantity of large language models is not limited in embodiments of this application. A method for associating the large language model with the intelligent agent may be flexibly selected based on a type of the large language model. The type of the large language model includes but is not limited to an autoregressive large language model and a non-autoregressive large language model.

In an example, the large language model is associated with the intelligent agent in a one-to-one manner. Each intelligent agent is based on a dedicated large language model, and a large language model drives only a single intelligent agent corresponding to the large language model. The large language model may be trained for a responsibility of an associated intelligent agent. For example, a large language model associated with an operation intelligent agent may be fine-tuned and trained for a task of generating a network operation management system operation instruction, to improve precision of outputting each network operation management system operation instruction by the large language model, and avoid a case like a syntax error.

In another example, the large language model is associated with the intelligent agent in a one-to-many manner. Each intelligent agent is based on a large language model, and a plurality of intelligent agents share a same large language model. In other words, a same large language model drives a plurality of intelligent agents. In a scenario in which computing resources are limited, a plurality of intelligent agents may share a same large language model and use methods such as prompt engineering (Prompt Engineering, Prompting) to assist the large language model in implementing different responsibilities and completing different tasks. When the large language model is shared, the plurality of intelligent agents usually have specific common responsibilities and capabilities. For example, both an analysis intelligent agent and a review intelligent agent that may share the large language model have a large amount of network fault repairing knowledge.

A quantity of network operation management systems is not limited in embodiments of this application, and a method for associating the network operation management system with the intelligent agent may be flexibly selected based on an actual application scenario.

In an example, the network operation management system is associated with the intelligent agent in a one-to-one manner. A single intelligent agent that can operate the network operation management system operates only one network operation management system. A same network operation management system is operated by only one intelligent agent. This type of intelligent agent may specifically invoke an API of the network operation management system or an instruction of another software tool to operate corresponding software.

In another example, the network operation management system is associated with the intelligent agent in a many-to-one manner. A single intelligent agent that can operate the network operation management system can operate a plurality of network operation management systems. A same network operation management system is operated by only one intelligent agent. This type of intelligent agent may specifically invoke APIs of a plurality of network operation management systems and an instruction of a software tool to operate corresponding software.

In still another example, the network operation management system is associated with the intelligent agent in a one-to-many manner. A plurality of intelligent agents that can operate the network operation management system operate a same network operation management system. A single network operation management system is operated by a plurality of intelligent agents. A plurality of intelligent agents of this type are configured to: implement different functions and operate a single network operation management system together. Intelligent agents with different responsibilities have stronger and more specialized capabilities in corresponding fields of the intelligent agents.

The following describes a specific implementation in which a plurality of intelligent agents collaborate to complete a network operation and maintenance task. In embodiments of this application, at least a first intelligent agent and a second intelligent agent should be included. On this basis, more intelligent agents such as a third intelligent agent may be included. A quantity of intelligent agents depends on an actual requirement, and is not limited herein. Intelligent agents with a same responsibility may be added to enhance credibility of an intelligent agent cluster, intelligent agents with different responsibilities may be divided and combined, and another type of intelligent agent having a capability that can help network operation and maintenance may be added. During actual application, intelligent agents are usually distinguished based on different responsibilities and functions. In other words, different intelligent agents usually have different responsibilities and functions. For example, the first intelligent agent is an operation intelligent agent, the second intelligent agent is an analysis intelligent agent, and the third intelligent agent is a review intelligent agent. Certainly, in some possible scenarios, each intelligent agent may alternatively have a plurality of responsibilities and functions. For example, each intelligent agent has responsibilities and functions of an operation intelligent agent, an analysis intelligent agent, and a review intelligent agent. In other words, each intelligent agent needs to perform a corresponding operation based on a responsibility scope of the intelligent agent. If an intelligent agent has a plurality of responsibilities and functions, the intelligent agent may flexibly switch a role and perform different operations based on an actual scenario requirement.

Functions of the operation intelligent agent, the analysis intelligent agent, and the review intelligent agent in the network operation and maintenance scenario are first described herein.
1. Operation intelligent agent: Compared with other intelligent agents, the operation intelligent agent may operate one or more network operation management systems by outputting an operation instruction, and communicate with the network operation management system, an operating system, and another software program via an instruction executor. The operation intelligent agent may understand a natural language text sent by another intelligent agent and convert the natural language text into an API instruction for invoking the network operation management system and operating the network operation management system. The operation intelligent agent is further configured to receive a new fault notification from the network operation management system, and is configured to query for and receive network-related data provided by the network operation management system. The operation intelligent agent may read and understand text information of another intelligent agent and operation and maintenance personnel or technical personnel in a dialog channel, independently determine whether the text information includes a task that needs to be performed by the intelligent agent, and transfer the understood content and the to-be-completed task to a built-in instruction executor by using a feature representation and an output. The instruction executor completes the related task, for example, communicating with the network operation management system by invoking an API. The operation intelligent agent may send, to the dialog channel by using a structured representation like a natural language text or a list, data and information transferred by the network operation management system, for another intelligent agent to obtain or understand. Responsibilities of the operation intelligent agent are not limited to data query and troubleshooting operations related to a network fault. The operation intelligent agent may understand and process text information and instructions of various network operation and maintenance tasks, and perform various query and other operations.
2. Analysis intelligent agent: The analysis intelligent agent is fine-tuned and trained based on a large quantity of fault operation and maintenance cases and a large amount of historical experience. The analysis intelligent agent has stronger fault analysis and diagnosis capabilities, may provide a possible root cause and reasoning logic of a fault, and may provide a fault repairing method and steps. The analysis intelligent agent may use a tool (for example, a Ping instruction, path planning, or fault knowledge search) in the network operation management system by using an instruction executor and a Toolformer technology, to assist in fault analysis. For example, the analysis intelligent agent is configured to analyze and diagnose a network fault based on a network status and fault information provided by the operation intelligent agent, and provide a repairing solution based on the network fault. The analysis intelligent agent may read and understand text information of another intelligent agent and the operation and maintenance personnel or the technical personnel in the dialog channel, independently determine whether the text information includes a task that needs to be performed by the intelligent agent, and send thinking steps such as a reasoning process, a thinking result, and a repairing solution to the dialog channel by using a natural language text and a symbol. The analysis intelligent agent requests more information from the operation intelligent agent when more information is needed for determining and analysis. When the repairing solution involves physical repairing, the analysis intelligent agent seeks help from a physical device operation and maintenance team. When the fault cannot be repaired, the analysis intelligent agent seeks help from the operation and maintenance personnel or the technical personnel. Responsibilities of the analysis intelligent agent are not limited to analyzing network fault information. The analysis intelligent agent may analyze a step and an operation needed for completing any network operation and maintenance task, and send a thinking step like an analysis process, and an analysis conclusion to the dialog channel. The Toolformer technology may be used to determine a current network status or another tool that assists in completing an operation and maintenance operation.
3. Review intelligent agent: The review intelligent agent has a stronger understanding of network operation and maintenance security and a large amount of fault causality knowledge. The review intelligent agent may evaluate a fault root cause and a fault repairing solution proposed by another intelligent agent, review rigor and accuracy of analysis and reasoning steps, and evaluate security and impact of a fault repairing operation. The review intelligent agent may use the instruction executor and the Toolformer technology to perform verification in a simulation environment of the network operation management system, or use another tool and method to verify effectiveness of the fault repairing solution. The review intelligent agent may use logic white-box decomposition and a simulated black-box effect to evaluate and provide a feedback on a troubleshooting conclusion proposed by another intelligent agent, to ensure that fault repairing is performed securely and effectively. For example, the review intelligent agent is configured to evaluate whether fault diagnosis information and a repairing solution provided by the analysis intelligent agent are correct, secure, and effective. The review intelligent agent may read and understand text information of another intelligent agent and the operation and maintenance personnel or the technical personnel in the dialog channel, and independently determine whether the text information includes a task that needs to be performed by the intelligent agent. The review intelligent agent may send information such as a review idea, a result, and a reason to the dialog channel by using a natural language text, to notify the analysis intelligent agent whether the diagnosis and the solution are feasible. The review intelligent agent may use the Toolformer technology and the built-in instruction executor to invoke a tool like path planning to help logic determining and evidence verification. The review intelligent agent requests more information from the operation intelligent agent when more information is needed for determining and analysis. Responsibilities of the review intelligent agent are not limited to evaluating the network fault repairing solution. The review intelligent agent may evaluate correctness, security, and effectiveness of operation steps of another network operation and maintenance task.

For ease of description, the following first uses an example in which the first intelligent agent is an operation intelligent agent, the second intelligent agent is an analysis intelligent agent, and the third intelligent agent is a review intelligent agent to describe an implementation in which a plurality of intelligent agents collaborate to complete a network operation and maintenance task. In some possible scenarios, an intelligent agent first completes a corresponding operation based on a current role. After a current phase in the network operation and maintenance scenario ends and a next phase is entered, the intelligent agent may alternatively switch to another role to complete a corresponding operation. A specific manner may be flexibly adjusted based on an actual network operation and maintenance scenario. For example, the first intelligent agent may alternatively be an analysis intelligent agent and/or a review intelligent agent, and the second intelligent agent may alternatively be a review intelligent agent or the like. In other words, the first intelligent agent is a set of an operation intelligent agent and an analysis intelligent agent, or the first intelligent agent is a set of an operation intelligent agent and a review intelligent agent, and the second intelligent agent is a set of an analysis intelligent agent and a review intelligent agent.

In a scenario in which a plurality of intelligent agents collaborate to complete a network operation and maintenance task, for an intelligent agent driven by a large language model, the large language model is similar to a "brain" of the intelligent agent. The intelligent agent implements a specific function based on a responsibility of the intelligent agent by using the large language model. Specifically, some corresponding statements may be built in the intelligent agent based on the responsibility of the intelligent agent, and these statements are used to notify the large language model of the responsibility of the intelligent agent and the function to be implemented by the intelligent agent. Built-in statements of intelligent agents with different responsibilities are different. For example, built-in statements of the operation intelligent agent include but are not limited to "you are a role responsible for operating", built-in statements of the analysis intelligent agent include but are not limited to "you are a role responsible for analysis", and built-in statements of the review intelligent agent include but are not limited to "you are a role responsible for evaluation". A specific intelligent agent may copy information released by another intelligent agent in the dialog channel, concatenate the copied information with built-in statements, and send the copied information concatenated with the built-in statements to the large language model. The large language model can implement a corresponding function based on information transferred by the intelligent agent. The review intelligent agent is used as an example. The large language model may learn, based on the statement "you are a role responsible for analysis" transferred by the review intelligent agent, that a current responsibility of the large language model is analysis, and learn of, based on information in the dialog channel transferred by the review intelligent agent, specific content to be analyzed. A solution obtained through analysis by the large language model is fed back to the analysis intelligent agent, and the analysis intelligent agent releases the solution in the dialog channel, to interact with another intelligent agent.

In the foregoing association manner between the intelligent agent and the large language model, the intelligent agent may send a request to the large language model based on a responsibility of the intelligent agent, and the large language model implements a corresponding function based on the request. Requested content includes but is not limited to the statements formed by concatenating the built-in statement of the intelligent agent with the information in the dialog channel, as described in the foregoing example. Information transmission between the intelligent agent and the large language model may be implemented in a manner like an HTTPS protocol or a JSON data model. This is not specifically limited herein. Regardless of whether the large language model is associated with the intelligent agent in a one-to-one manner, or the large language model is associated with the intelligent agent in a one-to-many manner, each intelligent agent may be associated with a corresponding large language model in the manner described herein. In other words, in a scenario in which the large language model is associated with the intelligent agent in the one-to-many manner, the large language model is not limited to a specific responsibility or function, and the large language model may flexibly switch, based on requests sent by different intelligent agents, a responsibility and a function to be implemented. The following describes a specific association manner between each intelligent agent and a large language model with reference to a responsibility and a function of the intelligent agent in a network operation and maintenance scenario in embodiments of this application.

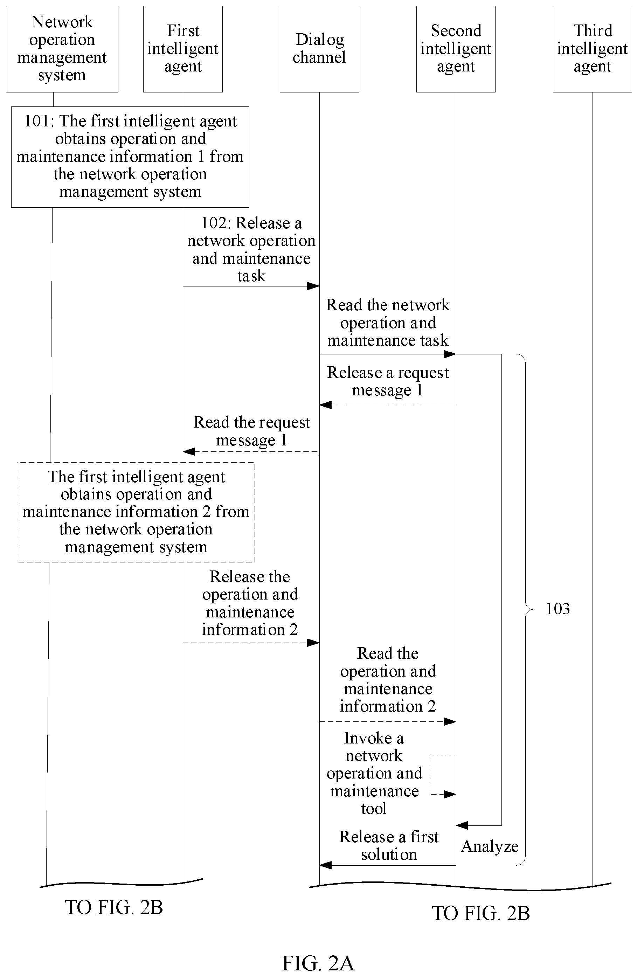

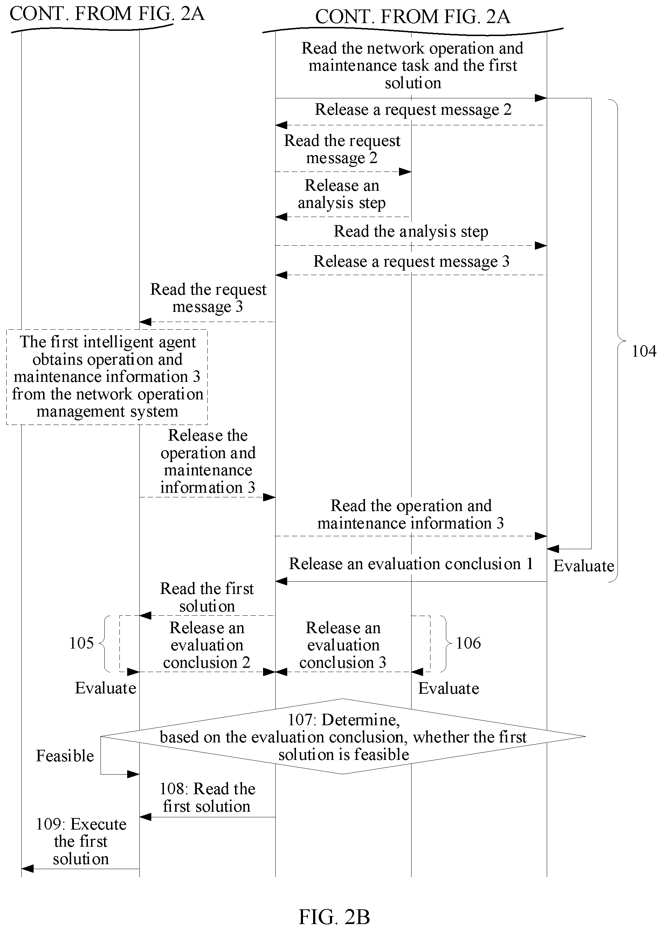

FIG. 2A and FIG. 2B are a diagram of an implementation in which a plurality of intelligent agents collaborate to complete a network operation and maintenance task according to an embodiment of this application. As shown in FIG. 2A and FIG. 2B, the implementation includes the following steps.

101: A first intelligent agent obtains operation and maintenance information 1 from a network operation management system.

In this embodiment of this application, all information or data related to network operation and maintenance falls within a scope of operation and maintenance information. For example, the operation and maintenance information includes but is not limited to fault information of a device, a connection topology between devices, information in a device manual, experience summarized by operation and maintenance personnel, and the like. In this embodiment of this application, a specific manner in which the first intelligent agent obtains the operation and maintenance information is not limited. In an example in which the first intelligent agent obtains the operation and maintenance information from the network operation management system, the first intelligent agent may further directly obtain the operation and maintenance information from the outside of the system through an input/output interface. In a possible scenario, the network operation management system may actively send the operation and maintenance information 1 to the first intelligent agent. For example, if the network operation management system finds that a fault occurs in a device, the network operation management system actively sends fault information to the first intelligent agent. In another possible scenario, the first intelligent agent may alternatively periodically query the network operation management system for operation and maintenance information, and the network operation management system feeds back the operation and maintenance information to the first intelligent agent.

102: The first intelligent agent releases a network operation and maintenance task.

The first intelligent agent determines the network operation and maintenance task based on the obtained operation and maintenance information 1, and releases the network operation and maintenance task in a dialog channel. A presentation form of information released by the first intelligent agent includes but is not limited to a natural language text, a data symbol, a visual image, and the like, and the network operation and maintenance task includes but is not limited to a network fault repairing task, a network line provisioning task, and the like. In an example, the first intelligent agent is driven by a large language model. The first intelligent agent sends the operation and maintenance information 1 to the large language model, and notifies the large language model of a function to be implemented. For example, the first intelligent agent sends the following request to the large language model: "Determine a network operation and maintenance task with reference to the operation and maintenance information 1". In another example, the first intelligent agent is not driven by a large language model. The first intelligent agent may generate the network operation and maintenance task based on a specified program and with reference to the operation and maintenance information 1. For example, the first intelligent agent generates the network operation and maintenance task by extracting a keyword from the operation and maintenance information 1.

In some possible scenarios, the first intelligent agent may alternatively release the obtained operation and maintenance information 1 to the dialog channel. Alternatively, the first intelligent agent may first perform pre-analysis and filtering on the obtained operation and maintenance information 1, and release information obtained through filtering to the dialog channel. A specific filtering condition is associated with the network operation and maintenance task. For example, the operation and maintenance task released by the first intelligent agent is to resolve network congestion, but the operation and maintenance information 1 does not indicate that a fault occurs in a network device. In this case, the first intelligent agent may exclude information related to the network device fault, perform filtering to obtain information related to traffic, and release the information to the dialog channel. In an example, the first intelligent agent may send a related request to the large language model, to request the large language model to perform pre-analysis and filtering on the operation and maintenance information 1, and the large language model sends information obtained through filtering to the first intelligent agent.

103: A second intelligent agent determines a first solution based on the network operation and maintenance task, and releases the first solution.

The second intelligent agent may read, from the dialog channel, the network operation and maintenance task released by the first intelligent agent, and perform analysis based on the network operation and maintenance task to obtain the first solution used to complete the network operation and maintenance task. The second intelligent agent releases the first solution in the dialog channel. The first solution should specifically include an implementation of completing the network operation and maintenance task. In addition, the first solution may further include an analysis step for determining the first solution, causality between steps for determining the first solution, and the like. This is not specifically limited herein. In an example, the second intelligent agent is driven by a large language model. The second intelligent agent sends a related request to the large language model, to request the large language model to perform analysis based on the network operation and maintenance task to obtain the solution used to complete the network operation and maintenance task, and the large language model sends the first solution obtained through analysis to the second intelligent agent.

In a possible scenario, more information is needed for the second intelligent agent to perform analysis to determine the first solution. The second intelligent agent releases a request message 1 in the dialog channel, to request the first intelligent agent to provide more operation and maintenance information. For example, a large language model associated with the second intelligent agent finds, through analysis, that more operation and maintenance information is needed, and then notifies the second intelligent agent to release the request message 1. The first intelligent agent reads the request message 1 from the dialog channel, and obtains operation and maintenance information 2 from the network operation management system. The operation and maintenance information 2 may include information that is not in the operation and maintenance information 1. The first intelligent agent releases the operation and maintenance information 2 in the dialog channel, and the second intelligent agent reads the operation and maintenance information 2 from the dialog channel, and determines the first solution based on the operation and maintenance information 2 and the network operation and maintenance task.

In another possible scenario, the second intelligent agent may alternatively invoke a network operation and maintenance tool based on the network operation and maintenance task to help determine the first solution. For example, a large language model associated with the second intelligent agent finds, through analysis, that the network operation and maintenance tool needs to be invoked to help with analysis, and then notifies the second intelligent agent to invoke the network operation and maintenance tool. For example, the network operation and maintenance task is the network fault repairing task. The second intelligent agent sends an instruction to the network operation management system, to invoke a tool like a Ping instruction or fault knowledge search in the network operation management system, so as to help determine the first solution used to rectify a network fault.

104: A third intelligent agent reads the network operation and maintenance task and the first solution, evaluates the first solution, and releases an evaluation conclusion 1.

The third intelligent agent reads, from the dialog channel, the network operation and maintenance task released by the first intelligent agent and the first solution released by the second intelligent agent, and evaluates the first solution based on the network operation and maintenance task. Further, the third intelligent agent releases the evaluation conclusion 1 in the dialog channel. The evaluation conclusion 1 specifically includes a conclusion about whether the first solution is feasible. In addition, the evaluation conclusion 1 may further include other information such as an evaluation idea and a reason for determining the evaluation conclusion. This is not specifically limited herein. In an example, the third intelligent agent is driven by a large language model. The third intelligent agent sends a related request to the large language model, to request the large language model to evaluate the first solution based on the network operation and maintenance task, and the large language model sends the evaluation conclusion 1 obtained through evaluation to the third intelligent agent.

In a possible scenario, the third intelligent agent needs to perform logical reasoning based on the analysis step for determining the first solution by the second intelligent agent, to obtain the evaluation conclusion 1. The analysis step herein may be specifically a plurality of steps of thinking and logical analysis performed by the second intelligent agent in a process of determining the first solution, and there is causality between the steps. The third intelligent agent can effectively determine whether the first solution is appropriate by performing logical reasoning based on the analysis step provided by the second intelligent agent. In an example, the first solution released by the second intelligent agent includes the analysis step for determining the first solution, and the third intelligent agent may directly perform logical reasoning based on the analysis step, to obtain the evaluation conclusion 1. In another example, the first solution released by the second intelligent agent does not include the analysis step for determining the first solution, and the third intelligent agent releases a request message 2 in the dialog channel, to request the second intelligent agent to provide the analysis step for determining the first solution. The second intelligent agent reads the request message 2 from the dialog channel, and releases, in the dialog channel, the analysis step for determining the first solution. Further, the third intelligent agent reads, from the dialog channel, the analysis step for determining the first solution, and performs logical reasoning based on the analysis step, to obtain the evaluation conclusion 1. For example, the third intelligent agent sends the analysis step of the first solution to the associated large language model, and the large language model performs logical reasoning based on the analysis step to obtain the evaluation conclusion 1, and sends the evaluation conclusion 1 to the third intelligent agent.

In another possible scenario, the third intelligent agent performs simulation on the first solution, and determines the evaluation conclusion 1 based on a simulation result. For example, the third intelligent agent sends an instruction to the network operation management system, to check the first solution in a simulation environment in the network operation management system. If the simulation result indicates that the first solution is feasible, the evaluation conclusion 1 indicating that the first solution is feasible is released. If the simulation result indicates that the first solution is infeasible, the evaluation conclusion 1 indicating that the first solution is infeasible is released. For example, the large language model associated with the third intelligent agent notifies the third intelligent agent to perform simulation on the first solution, the third intelligent agent sends the simulation result to the large language model, and the large language model obtains the evaluation conclusion 1 based on the simulation result and sends the evaluation conclusion 1 to the third intelligent agent.

In still another possible scenario, more information is needed for the third intelligent agent to evaluate the first solution. The third intelligent agent releases a request message 3 in the dialog channel, to request the first intelligent agent to provide more operation and maintenance information. For example, the large language model associated with the third intelligent agent finds that more operation and maintenance information is needed for evaluation of the first solution, and then notifies the second intelligent agent to release the request message 3. The first intelligent agent reads the request message 3 from the dialog channel, and obtains operation and maintenance information 3 from the network operation management system. The first intelligent agent releases the operation and maintenance information 3 in the dialog channel, and the third intelligent agent reads the operation and maintenance information 3 from the dialog channel, and evaluates the first solution based on the operation and maintenance information 3.

105: The first intelligent agent reads the first solution, evaluates the first solution, and releases an evaluation conclusion 2.

Optionally, in some possible scenarios, the first intelligent agent may alternatively be configured to implement a function of the third intelligent agent. To be specific, the first intelligent agent reads the first solution from the dialog channel, and evaluates the first solution based on the network operation and maintenance task. Further, the first intelligent agent releases the evaluation conclusion 2 in the dialog channel. A specific manner in which the first intelligent agent evaluates the first solution is similar to an implementation of the third intelligent agent. For details, refer to related descriptions of step 104. Details are not described herein again.

106: The second intelligent agent evaluates the first solution and releases an evaluation conclusion 3.

Optionally, in some possible scenarios, the second intelligent agent may alternatively be configured to implement a function of the third intelligent agent. To be specific, the second intelligent agent evaluates the first solution based on the network operation and maintenance task. Further, the second intelligent agent releases the evaluation conclusion 3 in the dialog channel. A specific manner in which the second intelligent agent evaluates the first solution is similar to an implementation of the third intelligent agent. For details, refer to related descriptions of step 104. Details are not described herein again.

107: The plurality of intelligent agents determine, based on the evaluation conclusion, whether the first solution is feasible.

Specifically, if it is determined that the first solution is feasible, the first intelligent agent performs step 108 and step 109. For example, if only the third intelligent agent releases the evaluation conclusion 1 in the dialog channel, and the evaluation conclusion 1 indicates that the first solution is feasible, the first intelligent agent performs step 108 and step 109. For another example, in addition to the evaluation conclusion 1 released by the third intelligent agent in the dialog channel, the first intelligent agent further releases the evaluation conclusion 2 in the dialog channel, and/or the second intelligent agent further releases the evaluation conclusion 3 in the dialog channel. In this case, if the evaluation conclusion 1, the evaluation conclusion 2, and the evaluation conclusion 3 all indicate that the first solution is feasible, the first intelligent agent performs step 108 and step 109. On the contrary, provided that only one evaluation conclusion indicates that the first solution is infeasible, the plurality of intelligent agents need to re-discuss and determine a new feasible solution. An evaluation conclusion released by each intelligent agent in the dialog channel can be read by other intelligent agents. For different conclusions indicating that the first solution is feasible or infeasible, the intelligent agents perform different subsequent corresponding operations based on the conclusions.

108: The first intelligent agent reads the first solution from the dialog channel.

A manner in which each intelligent agent obtains information from the dialog channel may be that the intelligent agent actively queries for information in the dialog channel, or may be that received information is forwarded to the intelligent agent in the dialog channel. For example, the first intelligent agent actively queries for the information in the dialog channel, to obtain a conclusion indicating that the first solution is feasible, and read the first solution. For another example, a conclusion indicating that the first solution is feasible and the first solution may alternatively be sent to the first intelligent agent in the dialog channel.

109: The first intelligent agent operates the network operation management system to execute the first solution.

Specifically, the first intelligent agent operates the network operation management system based on the first solution to execute the network operation and maintenance task. For example, a natural language text that is of the first solution and that is output by the first intelligent agent is converted into an instruction that can invoke an API of the network operation management system or another tool, and an executor outputs an instruction to the network operation management system to operate the network operation management system to execute the network operation and maintenance task based on the first solution. In an example, the first intelligent agent is driven by the large language model. The first intelligent agent may send a related request to the large language model, to request the large language model to convert the natural language text of the first solution into the instruction, and the large language model sends the instruction obtained through conversion to the executor. If the first solution includes a plurality of execution steps, the large language model may alternatively convert each step into a corresponding instruction. In another example, the first intelligent agent is not driven by the large language model. The executor of the first intelligent agent may convert the natural language text of the first solution into the instruction based on a specified program. For example, the executor of the first intelligent agent generates the instruction by extracting a keyword from the first solution.

When communication is performed through the API, an operation of the first intelligent agent is performed by using a security authentication module and an instruction distribution module of the network operation management system, and then a corresponding functional module in the network operation management system implements a corresponding operation. For example, the security authentication module first performs security authentication on the instruction output by the executor, to ensure security of the instruction. The instruction that passes the security authentication is then distributed by the instruction distribution module to different functional modules (for example, a management module, a control module, and an analysis module) for operation.

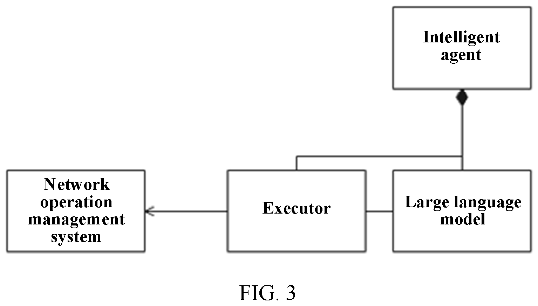

FIG. 3 is a diagram of an implementation in which an intelligent agent operates a network operation management system according to an embodiment of this application. As shown in FIG. 3, an executor is a software program that can convert content such as a natural language text and a data symbol into a computer instruction, and the executor may also be referred to as an interpreter. The executor may be considered as a part of an intelligent agent. Each intelligent agent may be configured with an executor of the intelligent agent. For example, a first intelligent agent operates the network operation management system via an executor to execute a network operation and maintenance task. For another example, a second intelligent agent invokes, via an executor, a network operation and maintenance tool in the network operation management system to help determine a first solution. For still another example, a third intelligent agent invokes, via an executor, a simulation environment in the network operation management system to evaluate a first solution.

In some possible scenarios, after the first intelligent agent executes the first solution, a plurality of intelligent agents may further collaborate to evaluate an execution effect of the first solution. In some other possible scenarios, if it is determined that the first solution is infeasible, a plurality of intelligent agents further need to obtain a new solution through re-discussion and negotiation to complete the network operation and maintenance task. These possible scenarios are further described below with reference to specific embodiments.

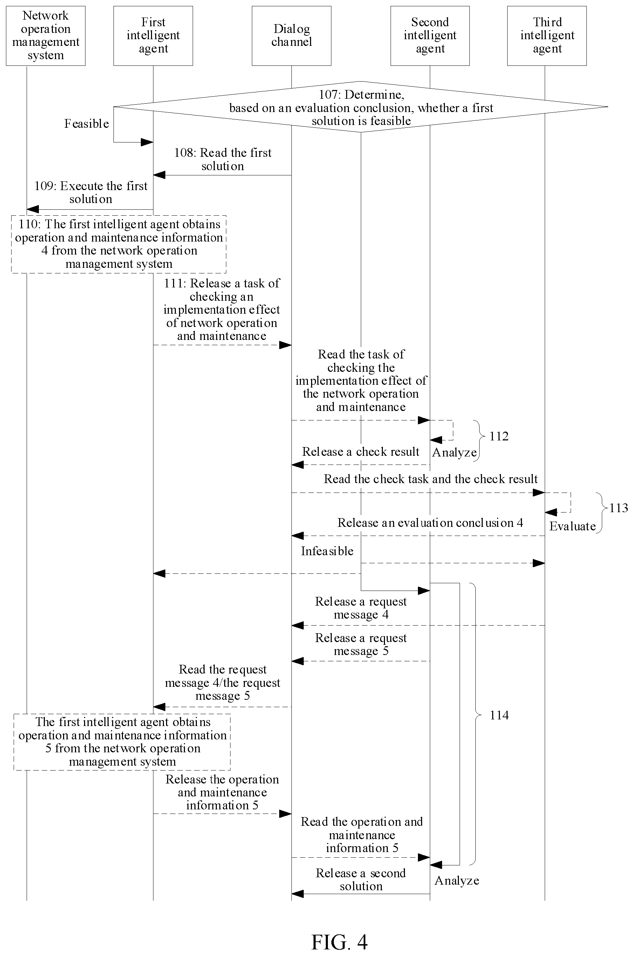

FIG. 4 is a diagram of another implementation in which a plurality of intelligent agents collaborate to complete a network operation and maintenance task according to an embodiment of this application. As shown in FIG. 4, the implementation includes the following steps.

110: A first intelligent agent obtains operation and maintenance information 4 from a network operation management system.

Specifically, after the first intelligent agent operates the network operation management system to execute a first solution, the first intelligent agent obtains the operation and maintenance information 4 from the network operation management system. Because the network operation management system has executed the first solution, the operation and maintenance information 4 newly obtained by the first intelligent agent is different from previously obtained operation and maintenance information. For example, the network operation management system rectifies a part of a network fault by executing the first solution, and the operation and maintenance information 4 has less alarm information than the previous operation and maintenance information.

111: The first intelligent agent releases a task of checking an implementation effect of network operation and maintenance.

The first intelligent agent determines, based on the obtained operation and maintenance information 4, the task of checking the implementation effect of the network operation and maintenance, and releases, in a dialog channel, the task of checking the implementation effect of the network operation and maintenance.

112: A second intelligent agent determines, based on the task of checking the implementation effect of the network operation and maintenance, a check result of the implementation effect of the network operation and maintenance.

The second intelligent agent may read, from the dialog channel, the task of checking the implementation effect of the network operation and maintenance that is released by the first intelligent agent, and analyze the check task to obtain the check result. Further, the second intelligent agent releases the check result in the dialog channel. The check result may include a parameter for measuring the implementation effect of the network operation and maintenance and an evaluation of the implementation effect of the network operation and maintenance. In addition, the check result may further include an analysis step for determining the check result, causality between steps for determining the check result, and the like. This is not specifically limited herein.

113: A third intelligent agent reads the check task and the check result, evaluates the check result, and releases an evaluation conclusion 4.

The third intelligent agent reads, from the dialog channel, the check task released by the first intelligent agent and the check result released by the second intelligent agent, and evaluates the check result based on the check task. Further, the third intelligent agent releases the evaluation conclusion 4 in the dialog channel. The evaluation conclusion 4 specifically includes a conclusion about whether the check result is accurate. In addition, the evaluation conclusion 4 may further include other information such as an evaluation idea and a reason for determining the evaluation conclusion. This is not specifically limited herein.

A manner in which the plurality of intelligent agents collaborate to evaluate an execution effect of the first solution described in step 110 to step 113 is similar to a manner in which the plurality of intelligent agents collaborate to determine the first solution used to complete the network operation and maintenance task described in step 101 to step 104. In both manners, the first intelligent agent releases the task, the second intelligent agent provides the solution used to complete the task, and the third intelligent agent evaluates the solution. Therefore, for specific implementations of step 110 to step 113, refer to related descriptions of step 101 to step 104. Details are not described herein again. Optionally, the first intelligent agent and/or the second intelligent agent may alternatively evaluate the foregoing check result and release an evaluation conclusion.

114: The second intelligent agent determines a second solution based on the network operation and maintenance task, and releases the second solution.

If it is determined in step 107 that the first solution is infeasible, the second intelligent agent re-determines the second solution based on the network operation and maintenance task, and releases the second solution in the dialog channel. That the first solution is infeasible means that the first solution cannot be actually executed. For example, the network operation and maintenance task cannot be completed through execution based on the first solution, an effect of execution based on the first solution is not ideal, or some other problems are caused through execution based on the first solution. For example, the evaluation conclusion 1 released by the third intelligent agent indicates that the third intelligent agent checks some configurations, finds that some problems are introduced when the first solution is used, and suggests rethinking and providing a new solution to complete the network operation and maintenance task. After reading the evaluation conclusion 1 released by the third intelligent agent, the second intelligent agent negates an analysis idea of previously determining the first solution, and may further determine the second solution with reference to evaluation logic and a suggestion of the third intelligent agent and based on a new idea.

In some possible scenarios, to facilitate determining the new second solution by the second intelligent agent, the first intelligent agent may obtain new operation and maintenance information 5 from the network operation management system, and provide the operation and maintenance information 5 for the second intelligent agent, so that the second intelligent agent determines the second solution based on the operation and maintenance information 5 and the network operation and maintenance task.

In an example, after reading, from the dialog channel, the evaluation conclusion 1 released by the third intelligent agent, the first intelligent agent learns that the first solution currently provided by the second intelligent agent is infeasible. In this case, the first intelligent agent may actively obtain the new operation and maintenance information 5 from the network operation management system, and release the operation and maintenance information 5 in the dialog channel, so that the second intelligent agent determines the new second solution based on the operation and maintenance information 5.

In another example, in a process of analyzing and evaluating the first solution, the third intelligent agent finds that the second intelligent agent provides the infeasible first solution due to obtained limited information. In this case, the third intelligent agent may actively release a request message 4 in the dialog channel, to request the first intelligent agent to obtain the new operation and maintenance information 5 from the network operation management system, and release the operation and maintenance information 5 in the dialog channel, so that the second intelligent agent determines the new second solution based on the operation and maintenance information 5.

In still another example, after reading, from the dialog channel, the evaluation conclusion 1 released by the third intelligent agent, the second intelligent agent learns that the currently provided first solution is infeasible, and guesses that the first solution is infeasible due to limited obtained information. In this case, the second intelligent agent may actively release a request message 5 in the dialog channel, to request the first intelligent agent to obtain the new operation and maintenance information 5 from the network operation management system, and release the operation and maintenance information 5 in the dialog channel, so that the second intelligent agent determines the new second solution based on the operation and maintenance information 5.

After the second intelligent agent releases the second solution in the dialog channel, intelligent agents including the third intelligent agent may further evaluate the second solution and negotiate to determine whether the second solution is feasible. A specific manner is similar to step 104 to step 107, and details are not described herein again. If the plurality of intelligent agents consecutively negate a plurality of solutions in the procedure described above but still do not reach an agreement, it may be considered to report a problem to operation and maintenance personnel or technical personnel in the dialog channel, to perform a subsequent operation after the operation and maintenance personnel or the technical personnel replies.

In the foregoing embodiment, in a process in which the intelligent agents collaborate to complete the network operation and maintenance task, the intelligent agents may alternatively perform a corresponding operation based on an externally input instruction. For example, the operation and maintenance personnel or the technical personnel do not need to participate in the network operation and maintenance task. The operation and maintenance personnel or the technical personnel with corresponding permission may view, at any time, the dialog channel in which the intelligent agents interact, and trace a processing progress of the network operation and maintenance task. The operation and maintenance personnel or the technical personnel with corresponding permission may join a dialog in the dialog channel at any time, and provide guidance or instructions for the network operation and maintenance task by sending text information. The intelligent agent considers an indication of the operation and maintenance personnel or the technical personnel as a highest-level instruction.

Running environments of the plurality of intelligent agents may be designed in a plurality of different manners, to adapt to various application scenarios. The following separately describes the running environments.

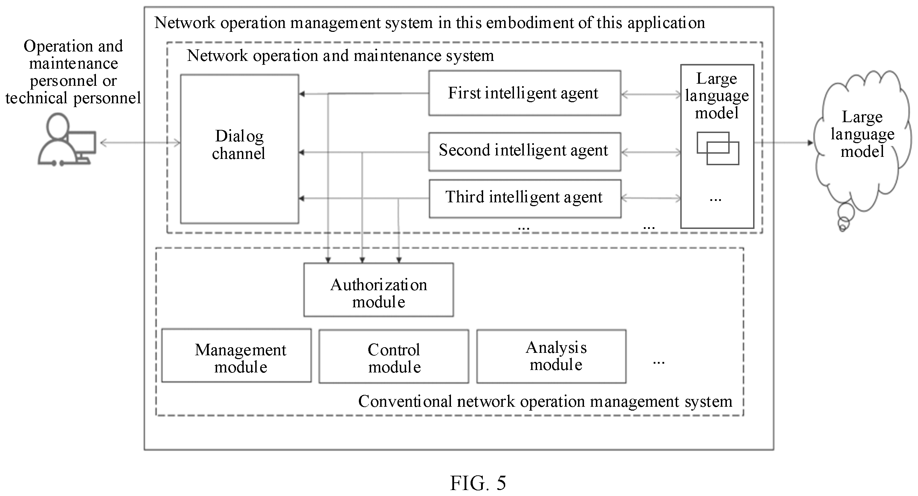

FIG. 5 is a diagram of a first running environment of a plurality of intelligent agents according to an embodiment of this application. As shown in FIG. 5, the plurality of intelligent agents run in a same network operation management system. In other words, the network operation and maintenance system including the plurality of intelligent agents and a conventional network operation management system form a network operation management system provided in this embodiment of this application. The conventional network operation management system includes different functional modules such as an authorization module, a management module, a control module, and an analysis module. Optionally, a large language model may be built in the network operation management system provided in this embodiment of this application, or the large language model may be deployed by using a cloud resource. This is not specifically limited herein. In a scenario shown in FIG. 5, an intra-system communication mode is used between the plurality of intelligent agents and between the intelligent agent and the conventional network operation management system. In other words, the intelligent agent and an associated network operation management system are located in a software system of the network operation management system. Each intelligent agent needs to be started based on a corresponding network operation management system. As one of components of the network operation management system, the intelligent agent cannot run independently, and directly communicates with another functional component in the network operation management system through an internal interface.

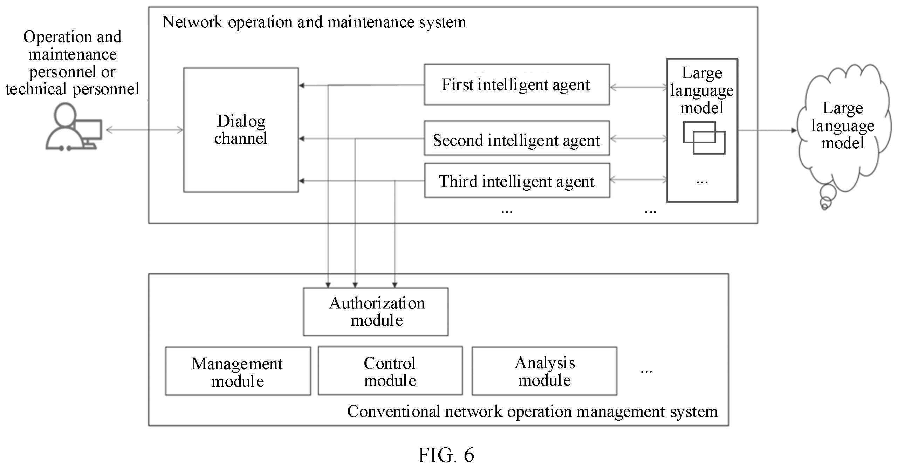

FIG. 6 is a diagram of a second running environment of a plurality of intelligent agents according to an embodiment of this application. Different from the scenario shown in FIG. 5, as shown in FIG. 6, the plurality of intelligent agents run in a system independent of a network operation management system. In a scenario shown in FIG. 6, an intra-system communication mode is used between the plurality of intelligent agents, and cross-system API communication is used between the intelligent agent and the network operation management system. The cross-system API communication may be implemented by using a protocol like a border gateway protocol (Border Gateway Protocol, BGP) or a hypertext transfer protocol secure (Hypertext Transfer Protocol Secure, HTTPS), or may be implemented by using a data model like a Java script object notation (Java Script Object Notation, JSON). In other words, the plurality of intelligent agents are integrated into an independent software system and may run independently, without relying on an environment of the network operation management system, and the plurality of intelligent agents communicate with the network operation management system through external interfaces. The independent software system may be in a same operating system of a physical device as the network operation management system, or in a separate physical device.

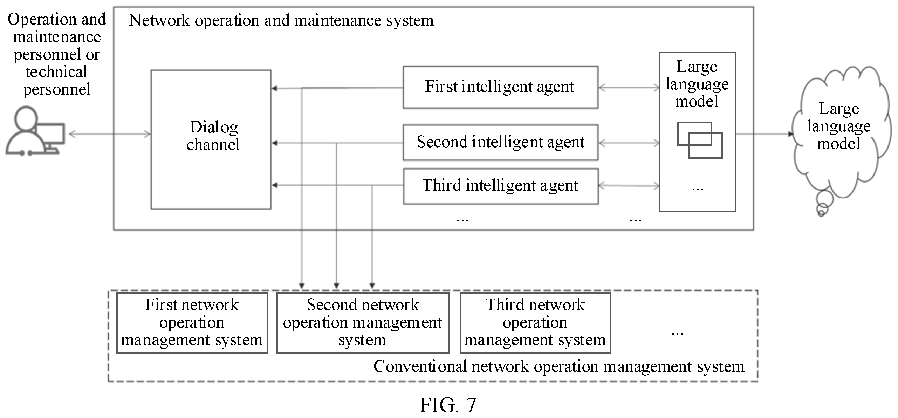

FIG. 7 is a diagram of a third running environment of a plurality of intelligent agents according to an embodiment of this application. Similar to the scenario shown in FIG. 6, as shown in FIG. 7, the plurality of intelligent agents run in a system independent of a network operation management system. Cross-system API communication is used between the intelligent agent and the network operation management system. Different from the scenario shown in FIG. 6, as shown in FIG. 7, there are a plurality of network operation management systems in a network, for example, a first network operation management system, a second network operation management system, and a third network operation management system. The plurality of network operation management systems may manage a plurality of types of networks. For example, the network operation management system is a network operation management system across domains or vendors, or a network operation management system across element management systems (Element Management Systems, EMSs), operation support systems (Operation Support Systems, OSSs), or network management systems (Network Management Systems, NMSs). A part of a network operation and maintenance task may require the plurality of network operation management systems to cooperate with the intelligent agent to resolve. For example, based on the network type, the network operation management system may include an IP operation management system, a transport operation management system, and a wireless operation management system.

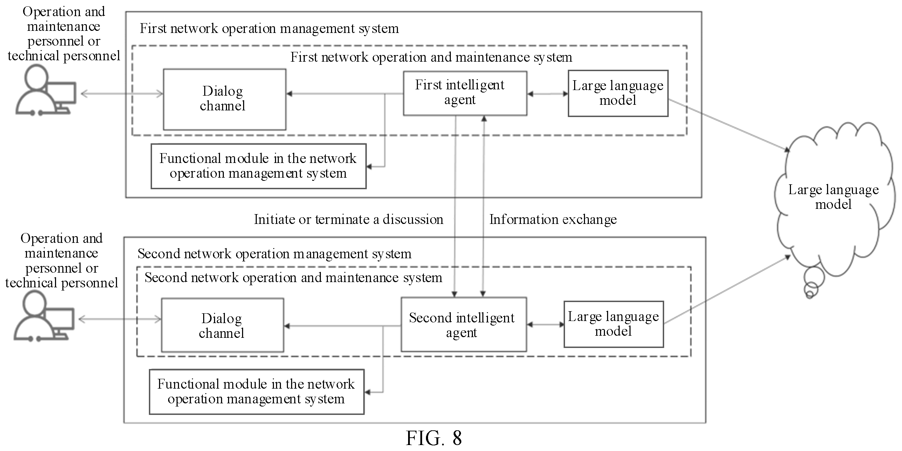

FIG. 8 is a diagram of a fourth running environment of a plurality of intelligent agents according to an embodiment of this application. As shown in FIG. 8, there are a plurality of network operation management systems in a network, and the plurality of network operation management systems may manage a plurality of types of networks. For example, the network operation management system is a network operation management system across domains or vendors, or a network operation management system across EMSs, OSSs, or NMSs. Each network operation management system has a specific quantity of intelligent agents with various responsibilities embedded in the system. In other words, different from the several scenarios shown in FIG. 5 to FIG. 7, different intelligent agents may alternatively run in different systems that are independent of each other. For example, in FIG. 8, a first intelligent agent runs in a first network operation management system, and a second intelligent agent runs in a second network operation management system. A part of a network operation and maintenance task may require the plurality of network operation management systems to cooperate with the intelligent agents in the plurality of network operation management systems to resolve. Generally, an intelligent agent in one of the network operation management systems initiates or terminates the network operation and maintenance task, and interacts with an intelligent agent in another network operation management system through cross-system API communication. The cross-system API communication may be implemented by using a protocol like a BGP or an HTTPS, or may be implemented by using a data model like a JSON. In the scenario shown in FIG. 8, each network operation management system includes a dialog channel. For example, information released by the first intelligent agent may be presented in a dialog channel of the first network operation management system, and may also be presented in a dialog channel of the first network operation management system after being received by the second intelligent agent. In other words, content presented in dialog channels in different network operation management systems is synchronized, and content exchanged between the plurality of intelligent agents may be synchronously presented in the dialog channels.

In the scenario shown in FIG. 8, in an example, a network device of a vendor A exists in the network, and is uniformly managed by an operation management system of the vendor A, and a network device of a vendor B also exists in the network, and is uniformly managed by an operation management system of the vendor B. The operation management system of the vendor A cannot manage the network device of the vendor B, and vice versa. When a part of a network operation and maintenance task involves devices of two vendors, for example, a problem occurs on a connection between a switch of the vendor A and a base station of the vendor B, the network operation management system of the vendor A and the network operation management system of the vendor B need to collaborate to resolve the problem.

Several possible network operation and maintenance scenarios are described below with reference to specific network operation and maintenance tasks.

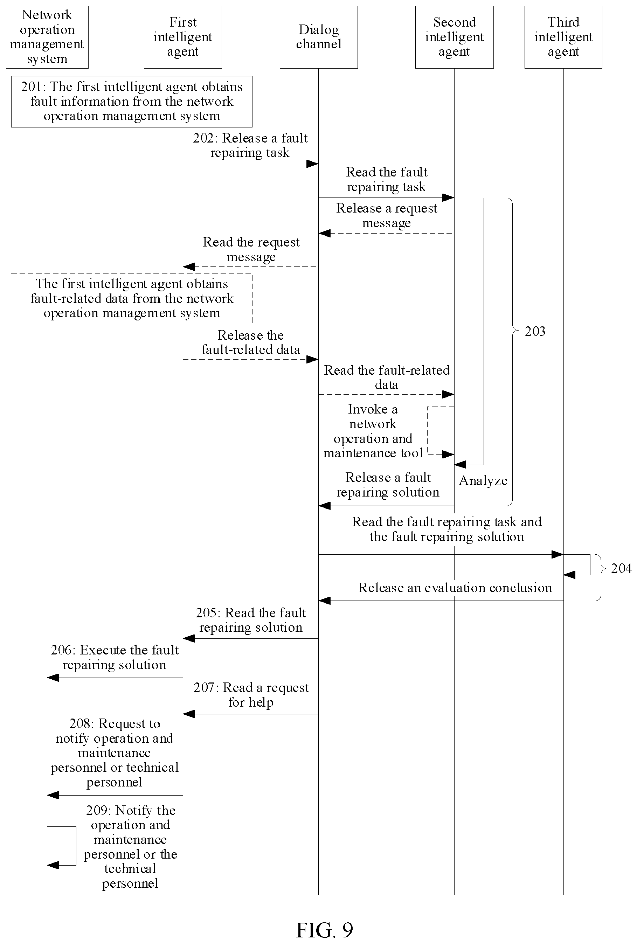

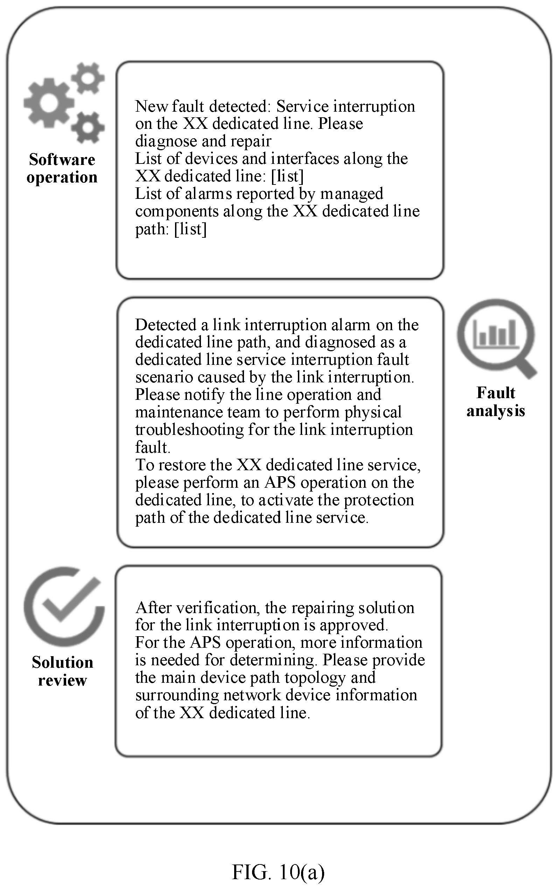

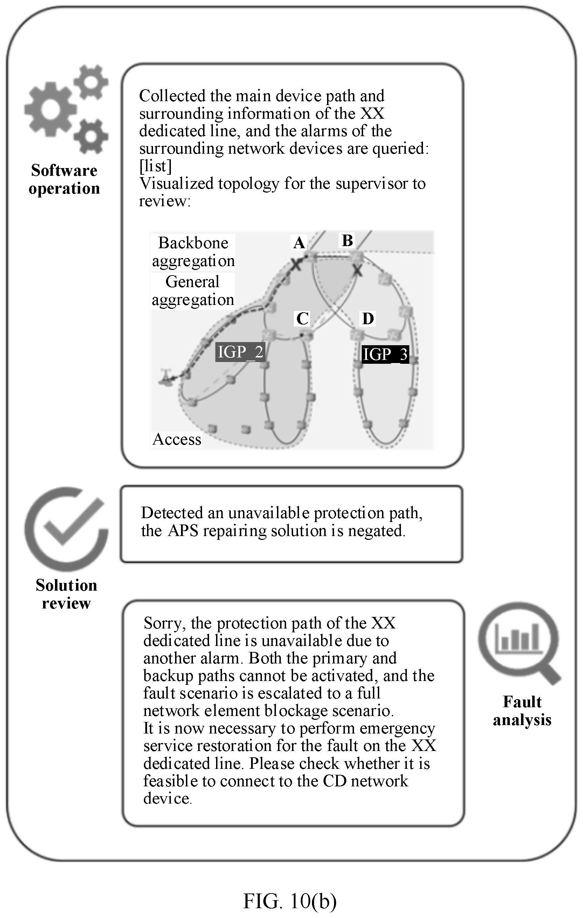

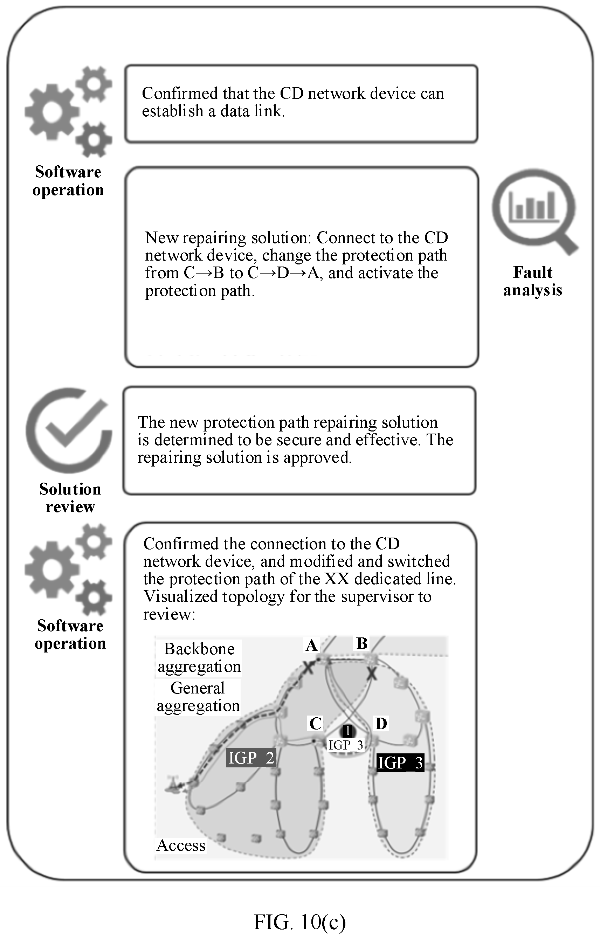

FIG. 9 is a diagram of an implementation in which a plurality of intelligent agents collaborate to rectify a network fault according to an embodiment of this application. FIG. 10(a) is a diagram of a dialog channel in a process in which a plurality of intelligent agents collaborate to rectify a network fault according to an embodiment of this application. FIG. 10(b) is a diagram of another dialog channel in a process in which a plurality of intelligent agents collaborate to rectify a network fault according to an embodiment of this application. FIG. 10(c) is a diagram of another dialog channel in a process in which a plurality of intelligent agents collaborate to rectify a network fault according to an embodiment of this application. As shown in FIG. 9, the implementation includes the following steps. The implementation shown in FIG. 9 may be applied to the several scenarios shown in FIG. 5 to FIG. 7.

201: A first intelligent agent obtains fault information from a network operation management system.

In a scenario in which a network fault occurs, the network operation management system may actively send the fault information to the first intelligent agent, or the first intelligent agent periodically queries the network operation management system for the fault information, and the network operation management system feeds back the fault information to the first intelligent agent. The fault information may include fault alarm information of a network device, and the like.

202: The first intelligent agent releases a fault repairing task.

The first intelligent agent determines the fault repairing task based on the obtained fault information, and releases the fault repairing task in a dialog channel. The fault repairing task refers to having intelligent agents negotiate to provide a solution that can rectify the network fault. As shown in FIG. 10(a), the first intelligent agent used for a software operation function may release the following content in the dialog channel: "New fault detected: Service interruption on the XX dedicated line. Please diagnose and repair", "List of devices and interfaces along the XX dedicated line: [list]", and "List of alarms reported by managed components along the XX dedicated line path: [list]".

203: A second intelligent agent determines a fault repairing solution based on the fault repairing task, and releases the fault repairing solution.

The second intelligent agent may read, from the dialog channel, the fault repairing task released by the first intelligent agent, and perform analysis based on the fault repairing task to obtain the fault repairing solution used to complete the fault repairing task. Further, the second intelligent agent releases the fault repairing solution in the dialog channel. The fault repairing solution should specifically include an implementation of completing the fault repairing solution. In addition, the fault repairing solution may further include an analysis step for determining the fault repairing solution, causality between steps for determining the fault repairing solution, and the like. This is not specifically limited herein.

In a possible scenario, more information is needed for the second intelligent agent to perform analysis to determine the fault repairing solution. The second intelligent agent releases a request message in the dialog channel, to request the first intelligent agent to provide more fault-related data. The first intelligent agent reads the request message from the dialog channel, and obtains the fault-related data from the network operation management system. The first intelligent agent releases the fault-related data in the dialog channel, and the second intelligent agent reads the fault-related data from the dialog channel and determines the fault repairing solution based on the fault-related data and the fault repairing task.

In another possible scenario, the second intelligent agent may further invoke a network operation and maintenance tool based on the fault repairing task to help determine the fault repairing solution. For example, a tool like a Ping instruction or fault knowledge search in the network operation management system is invoked to help determine the fault repairing solution for rectifying the network fault.

As shown in FIG. 10(a), the second intelligent agent used for a fault analysis function may release the following content in the dialog channel: "Detected a link interruption alarm on the dedicated line path, and diagnosed as a dedicated line service interruption fault scenario caused by the link interruption", "Please notify the line operation and maintenance team to perform physical troubleshooting for the link interruption fault", and "To restore the XX dedicated line service, please perform an automatic protection switching (Automatic Protection Switching, APS) operation on the dedicated line, to activate the protection path of the dedicated line service".

204: A third intelligent agent reads the fault repairing task and the fault repairing solution, evaluates the fault repairing solution, and releases an evaluation conclusion.

The third intelligent agent reads, from the dialog channel, the fault repairing task released by the first intelligent agent and the fault repairing solution released by the second intelligent agent, and evaluates the fault repairing solution based on the fault repairing task. Further, the third intelligent agent releases the evaluation conclusion in the dialog channel. The evaluation conclusion specifically includes a conclusion about whether the fault repairing solution is feasible. In addition, the evaluation conclusion may further include other information such as an evaluation idea and a reason for determining the evaluation conclusion. This is not specifically limited herein. In addition, a plurality of intelligent agents need to negotiate, based on the evaluation conclusion, a fault repairing solution that is agreed by all intelligent agents.

As shown in FIG. 10(a), the third intelligent agent used for a solution review function may release the following content in the dialog channel: "After verification, the repairing solution for the link interruption is approved", and "For the APS operation, more information is needed for determining. Please provide the main device path topology and surrounding network device information of the XX dedicated line". In other words, the third intelligent agent releases a request in the dialog channel, to request the first intelligent agent to provide more information.

As shown in FIG. 10(b), the first intelligent agent used for a software operation function may release the following content in the dialog channel: "Collected the main device path and surrounding information of the XX dedicated line, and the alarms of the surrounding network devices are queried: [list]. Visualized topology for operation and maintenance personnel or technical personnel to review: [topology diagram]". The second intelligent agent used for a fault analysis function may release the following content in the dialog channel: "Detected an unavailable protection path, the APS repairing solution is negated". The third intelligent agent used for a solution review function may release the following content in the dialog channel: "Sorry, the protection path of the XX dedicated line is unavailable due to another alarm. Both the primary and backup paths cannot be activated, and the fault scenario is escalated to a full network element blockage scenario", and "It is now necessary to perform emergency service restoration for the fault on the XX dedicated line. Please check whether it is feasible to connect to the CD network device".

As shown in FIG. 10(c), the first intelligent agent used for a software operation function may release the following content in the dialog channel: "Confirmed that the CD network device can establish a data link". The second intelligent agent used for a fault analysis function may release the following content in the dialog channel: "New repairing solution: Connect to the CD network device, change the protection path from C→B to C→D→A, and activate the protection path". The third intelligent agent used for a solution review function may release the following content in the dialog channel: "The new protection path repairing solution is determined to be secure and effective. The repairing solution is approved". The first intelligent agent used for the software operation function may release the following content in the dialog channel: "Confirmed the connection to the CD network device, and modified and switched the protection path of the XX dedicated line. Visualized topology for operation and maintenance personnel or technical personnel to review: [topology diagram]".

205: The first intelligent agent reads the fault repairing solution from the dialog channel.

206: The first intelligent agent operates the network operation management system to execute the fault repairing solution.

In some possible scenarios, if the fault repairing solution may be implemented by using the network operation management system, step 205 and step 206 are performed. In some other possible scenarios, if the fault repairing solution exceeds a capability of the network operation management system, for example, a physical operation is needed for repairing, step 207 to step 209 are performed.

207: The first intelligent agent reads a request for help from the dialog channel.

208: The first intelligent agent requests the network operation management system to notify the operation and maintenance personnel or the technical personnel.

209: The network operation management system notifies the operation and maintenance personnel or the technical personnel.

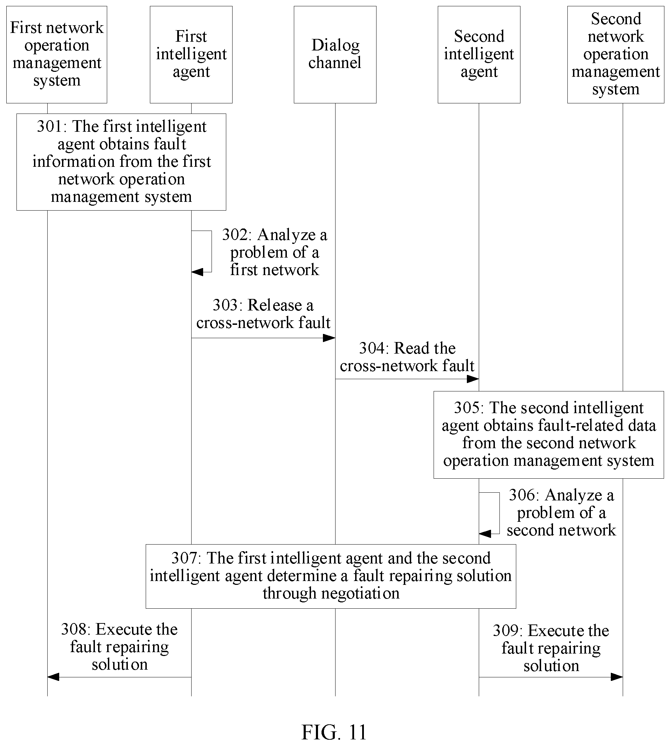

FIG. 11 is a diagram of another implementation in which a plurality of intelligent agents collaborate to rectify a network fault according to an embodiment of this application. As shown in FIG. 11, the implementation includes the following steps. The implementation shown in FIG. 11 may be applied to the scenario shown in FIG. 8. Types of a first network and a second network in the implementation shown in FIG. 11 are not limited herein. For example, the first network is a wireless network, and the second network is an IP network. A first intelligent agent associated with a first network operation management system has responsibilities and functions of the foregoing operation intelligent agent, the foregoing analysis intelligent agent, and the foregoing review intelligent agent, and a second intelligent agent associated with a second network operation management system also has the responsibilities and the functions of the foregoing operation intelligent agent, the foregoing analysis intelligent agent, and the foregoing review intelligent agent.

301: The first intelligent agent obtains fault information from the first network operation management system.

In a scenario in which a fault occurs in the first network, the first intelligent agent first switches to a role of the operation intelligent agent. The first network operation management system may actively send the fault information to the first intelligent agent, or the first intelligent agent periodically queries the first network operation management system for the fault information, and the first network operation management system feeds back the fault information to the first intelligent agent.

302: The first intelligent agent analyzes a problem of the first network.

After obtaining the fault information from the first network operation management system, the first intelligent agent switches to a role of the analysis intelligent agent, and the first intelligent agent may first analyze the problem of the first network. In a possible scenario, if the fault is caused by the problem of the first network, the first intelligent agent determines a fault repairing solution through analysis. Further, the first intelligent agent switches to a role of the review intelligent agent to evaluate the fault repairing solution. If it is evaluated that the fault repairing solution is feasible, the first intelligent agent switches to the role of the operation intelligent agent, and operates the first network operation management system to execute the fault repairing solution. In another possible scenario, if a cause of the fault is not the first network or the cause of the fault is not only the first network, the second intelligent agent and the second network operation management system also need to participate in a fault repairing task.

303: The first intelligent agent releases a cross-network fault in a dialog channel.

If the first intelligent agent determines, by analyzing the problem of the first network, that participation of the second intelligent agent and the second network operation management system is further needed for fault repairing, the first intelligent agent releases the cross-network fault in the dialog channel. In addition, the first intelligent agent may also release, in the dialog channel, an analysis result and an analysis process of analyzing the problem of the first network. In an example, the first network is a wireless network, and the second network is an IP network. The first intelligent agent finds that a problem occurs on a connection between a base station in the wireless network and a switch in the IP network. The first intelligent agent releases information in the dialog channel, to indicate that cooperation of related devices in both networks is needed to complete fault repairing.

304: The second intelligent agent reads the cross-network fault from the dialog channel.

305: The second intelligent agent obtains fault-related data from the second network operation management system.

Specifically, after reading the cross-network fault from the dialog channel, the second intelligent agent first switches to the role of the operation intelligent agent, and obtains the fault-related data from the second network operation management system.

306: The second intelligent agent analyzes a problem of the second network.

After obtaining the fault-related data from the second network operation management system, the second intelligent agent switches to the role of the analysis intelligent agent, to analyze the problem of the second network. Further, the second intelligent agent may release, in the dialog channel, an analysis result and an analysis process of analyzing the problem of the second network.

307: The first intelligent agent and the second intelligent agent determine a fault repairing solution through negotiation.

The first intelligent agent releases, in the dialog channel, the analysis result and the analysis process of analyzing the problem of the first network, and the second intelligent agent releases, in the dialog channel, the analysis result and the analysis process of analyzing the problem of the second network. It is equivalent to a case in which the first intelligent agent and the second intelligent agent exchange analysis processes and analysis conclusions of each other, and the first intelligent agent and the second intelligent agent may respectively provide fault repairing solutions with reference to shared information. Further, both the first intelligent agent and the second intelligent agent may switch to the role of the review intelligent agent, evaluate the fault repairing solutions currently provided by the first intelligent agent and the second intelligent agent, and exchange evaluation conclusions. If the first intelligent agent and the second intelligent agent reach a consensus on the evaluation conclusion, a specific execution phase of fault repairing may be entered. If the first intelligent agent and the second intelligent agent have not reached a consensus on the evaluation conclusion, the first intelligent agent and the second intelligent agent further continue to analyze the respective associated networks, and discuss to exchange opinions until the first intelligent agent and the second intelligent agent reach a consensus on the evaluation conclusion.

308: The first intelligent agent operates the first network operation management system to execute the fault repairing solution.

309: The second intelligent agent operates the second network operation management system to execute the fault repairing solution.

If the first intelligent agent and the second intelligent agent reach a consensus on the evaluation conclusion of the fault repairing solution, the first intelligent agent operates the first network operation management system to execute the fault repairing solution, and the second intelligent agent operates the second network operation management system to execute the fault repairing solution, to implement cross-network fault repairing.

In addition to the network operation and maintenance tasks in the fault repairing scenarios described in FIG. 9 and FIG. 11, a specific implementation in which a plurality of intelligent agents collaborate to complete another type of network operation and maintenance task is similar. The following uses an operation and maintenance task of line provisioning as an example for brief description. For a specific implementation, refer to related descriptions in the foregoing embodiments. Details are not described herein again.

In a possible scenario, the network operation management system sends information to the first intelligent agent, and provides a source network device and a sink network device for the first intelligent agent. The first intelligent agent forwards the information to the dialog channel. The second intelligent agent requests, from the first intelligent agent, a direct network link topology between the source network device and the sink network device. The first intelligent agent obtains the network link topology from the network operation management system, and releases the network link topology to the dialog channel. The second intelligent agent analyzes line provisioning based on the network link topology. An analysis process includes but is not limited to: using a Toolformer technology to invoke a graph algorithm tool to calculate a shortest path from the source network device to the sink network device, confirming with the first intelligent agent whether all links on the path is available for establishment of a new line and whether remaining bandwidth meets a line requirement, adjusting a path when adjustment is needed, and so on. After completing analysis, the second intelligent agent releases analysis steps and a conclusion (for example, a path of a new line) in the dialog channel for the third intelligent agent to review. A review process of the third intelligent agent includes but is not limited to: determining whether a network status that should be considered is considered in the analysis process, whether operation steps are continuous, and whether a step is skipped, and requesting the first intelligent agent to invoke a sandbox environment to verify feasibility of the new line. The third intelligent agent releases a conclusion evaluated as feasible in the dialog channel after the conclusion passes review of the third intelligent agent. The first intelligent agent reads operation steps needed for the operation and maintenance task of line provisioning, and performs a corresponding operation on the network operation management system.

In embodiments of this application, a manner in which the intelligent agents interact with each other in the dialog channel is merely a possible implementation. In some possible scenarios, the foregoing dialog channel may not be displayed externally, and a collaboration progress of a plurality of intelligent agents is displayed in a form like a log stream, a console, or a progress panel, or no communication information is displayed at all. To enable a supervision capability of the operation and maintenance personnel or the technical personnel, a manner like a command line, an instruction button, or an operation and maintenance assistant may be set, to be combined with the log stream, the console, or the progress panel mentioned above, without reflecting a "dialog" nature. A method like encapsulating a dialog process may be used, so that only one progress announcer is exposed in the dialog channel, without displaying a thinking process or a communication process of the intelligent agents. Under the premise that the intelligent agents maintain a same degree of intelligence, in some operation and maintenance scenarios, a single intelligent agent has potential to replace work of a plurality of intelligent agents. A single intelligent agent "talks to the intelligent agent itself" or is combined with another software tool or method. This can approximate network operation and maintenance capabilities of a plurality of intelligent agents. When an intelligent agent can have an ultra-high degree of intelligence, a single intelligent agent with ultra-high degree of intelligence can replace a plurality of intelligent agents whose intelligence degrees are not high.

It can be learned from the foregoing descriptions that a plurality of intelligent agents can resolve, through responsibility division and dialog collaboration, a network operation and maintenance task that cannot be resolved by a single intelligent agent. This avoids or resolves a problem that a single intelligent agent has a limited degree of intelligence and is excessively subjective to think. This ensures that a solution for a network operation and maintenance task is correct, secure, and effective. If the current solution is determined as ineffective, a new solution may continue to be explored, without participation of operation and maintenance personnel or technical personnel. When a plurality of specialized intelligent agents are used, an available large model parameter quantity and computing capability of a single intelligent agent can be focused on a specific field or capability, so that the intelligent agent can obtain a best effect in a task of a corresponding type, without paying attention to comprehensive intelligence of the single intelligent agent. This is because the plurality of intelligent agents can achieve complementary capabilities when working collaboratively.

Finally, it should be noted that, the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network operation and maintenance system, wherein the network operation and maintenance system comprises a first intelligent agent and a second intelligent agent, wherein
the first intelligent agent is configured to: obtain first operation and maintenance information, and release a network operation and maintenance task based on the first operation and maintenance information; and
the second intelligent agent is configured to: determine, based on the network operation and maintenance task, a first solution used to complete the network operation and maintenance task, and release the first solution, wherein the second intelligent agent is driven by a language model.

2. The network operation and maintenance system according to claim 1, wherein the network operation and maintenance system further comprises a third intelligent agent, wherein
the third intelligent agent is configured to: evaluate the first solution, and release an evaluation conclusion.

3. The network operation and maintenance system according to claim 2, wherein the first solution comprises an analysis step for determining the first solution; and
the third intelligent agent is specifically configured to evaluate the first solution based on the analysis step.

4. The network operation and maintenance system according to claim 2, wherein the third intelligent agent is further configured to release a first request message based on the first solution;
the second intelligent agent is further configured to release, based on the first request message, an analysis step for determining the first solution; and
the third intelligent agent is specifically configured to evaluate the first solution based on the analysis step.

5. The network operation and maintenance system according to any one of claims 2 to 4, wherein the third intelligent agent is further configured to release a second request message based on the first solution;
the first intelligent agent is further configured to: obtain second operation and maintenance information based on the second request message, and release the second operation and maintenance information; and
the third intelligent agent is specifically configured to evaluate the first solution based on the second operation and maintenance information.

6. The network operation and maintenance system according to any one of claims 2 to 5, wherein if the evaluation conclusion indicates that the first solution is infeasible, the second intelligent agent is further configured to: determine, based on the network operation and maintenance task, a second solution used to complete the network operation and maintenance task, and release the second solution.

7. The network operation and maintenance system according to claim 6, wherein if the evaluation conclusion indicates that the first solution is infeasible, the first intelligent agent is further configured to: obtain third operation and maintenance information, and release the third operation and maintenance information; and
the second intelligent agent is specifically configured to determine the second solution based on the third operation and maintenance information and the network operation and maintenance task.

8. The network operation and maintenance system according to any one of claims 1 to 7, wherein the second intelligent agent is further configured to release a third request message based on the network operation and maintenance task;
the first intelligent agent is configured to obtain fourth operation and maintenance information based on the third request message; and
the second intelligent agent is specifically configured to determine the first solution based on the network operation and maintenance task and the fourth operation and maintenance information.

9. The network operation and maintenance system according to any one of claims 1 to 8, wherein the second intelligent agent is specifically configured to invoke a network operation and maintenance tool based on the network operation and maintenance task to determine the first solution.

10. The network operation and maintenance system according to any one of claims 1 to 9, wherein the first intelligent agent and the second intelligent agent run in the first network operation management system, the first intelligent agent and the second intelligent agent run in a system independent of the first network operation management system, or the first intelligent agent and the second intelligent agent run in different network operation and maintenance management systems.

11. The network operation and maintenance system according to any one of claims 1 to 10, wherein interaction between the first intelligent agent and the second intelligent agent is presented by using a dialog in a channel.

12. The network operation and maintenance system according to any one of claims 1 to 11, wherein the language model is a large language model LLM.

13. The network operation and maintenance system according to claim 1, wherein the first intelligent agent and/or the second intelligent agent are/is configured to: evaluate the first solution, and release an evaluation conclusion.

14. A network operation and maintenance method, wherein the method is applied to a network operation and maintenance system, the network operation and maintenance system comprises a first intelligent agent and a second intelligent agent, and the method comprises:
obtaining, by the first intelligent agent, first operation and maintenance information, and releasing a network operation and maintenance task based on the first operation and maintenance information; and
determining, by the second intelligent agent based on the network operation and maintenance task, a first solution used to complete the network operation and maintenance task, and releasing the first solution, wherein the second intelligent agent is driven by a language model.

15. The method according to claim 14, wherein the network operation and maintenance system further comprises a third intelligent agent, and the method further comprises:
evaluating, by the third intelligent agent, the first solution, and releasing an evaluation conclusion.

16. The method according to claim 15, wherein the first solution comprises an analysis step for determining the first solution, and evaluating, by the third intelligent agent, the first solution comprises:
evaluating, by the third intelligent agent, the first solution based on the analysis step.

17. The method according to claim 15, wherein the method further comprises:
releasing, by the third intelligent agent, a first request message based on the first solution; and
releasing, by the second intelligent agent based on the first request message, an analysis step for determining the first solution; and
evaluating, by the third intelligent agent, the first solution comprises:
evaluating, by the third intelligent agent, the first solution based on the analysis step.

18. The method according to any one of claims 15 to 17, wherein the method further comprises:
releasing, by the third intelligent agent, a second request message based on the first solution; and
obtaining, by the first intelligent agent, second operation and maintenance information based on the second request message, and releasing the second operation and maintenance information; and
evaluating, by the third intelligent agent, the first solution comprises:
evaluating, by the third intelligent agent, the first solution based on the second operation and maintenance information.

19. The method according to any one of claims 15 to 18, wherein if the evaluation conclusion indicates that the first solution is infeasible, the method further comprises:
determining, by the second intelligent agent based on the network operation and maintenance task, a second solution used to complete the network operation and maintenance task, and releasing the second solution.

20. The method according to claim 19, wherein if the evaluation conclusion indicates that the first solution is infeasible, the method further comprises:
obtaining, by the first intelligent agent, third operation and maintenance information, and releasing the third operation and maintenance information; and
determining, by the second intelligent agent based on the network operation and maintenance task, the second solution used to complete the network operation and maintenance task comprises:
determining, by the second intelligent agent, the second solution based on the third operation and maintenance information and the network operation and maintenance task.

21. The method according to any one of claims 14 to 20, wherein the method further comprises:
releasing, by the second intelligent agent, a third request message based on the network operation and maintenance task; and
obtaining, by the first intelligent agent, fourth operation and maintenance information based on the third request message; and
determining, by the second intelligent agent based on the network operation and maintenance task, the first solution used to complete the network operation and maintenance task comprises:
determining, by the second intelligent agent, the first solution based on the network operation and maintenance task and the fourth operation and maintenance information.

22. The method according to any one of claims 14 to 21, wherein determining, by the second intelligent agent based on the network operation and maintenance task, the first solution used to complete the network operation and maintenance task comprises:
invoking, by the second intelligent agent, a network operation and maintenance tool based on the network operation and maintenance task, to determine the first solution.

23. The method according to any one of claims 14 to 22, wherein the first intelligent agent and the second intelligent agent run in the first network operation management system, the first intelligent agent and the second intelligent agent run in a system independent of the first network operation management system, or the first intelligent agent and the second intelligent agent run in different network operation and maintenance management systems.

24. The method according to any one of claims 14 to 23, wherein interaction between the first intelligent agent and the second intelligent agent is presented by using a dialog in a channel.

25. The method according to any one of claims 14 to 24, wherein the language model is a large language model LLM.

26. The method according to claim 14, wherein the method further comprises:
evaluating, by the first intelligent agent, the first solution, and releasing an evaluation conclusion, and/or evaluating, by the second intelligent agent, the first solution, and releasing an evaluation conclusion.
